# EUROPEAN PATENT SPECIFICATION

(11) **EP 3 240 232 B1**
(45) Date of publication and mention of the grant of the patent: **15.01.2020**
(21) Application number: 14909029.2
(22) Date of filing: 25.12.2014
(51) Int. Cl.: H04L 12/24

(54) **CLOUD-CONFIGURATION STORAGE SYSTEM, CLOUD-CONFIGURATION STORAGE METHOD, AND CLOUD-CONFIGURATION STORAGE PROGRAM**
SPEICHERSYSTEM FÜR CLOUD-KONFIGURATION, SPEICHERVERFAHREN FÜR CLOUD-KONFIGURATION UND SPEICHERPROGRAMM FÜR CLOUD-KONFIGURATION
SYSTÈME DE STOCKAGE DE CONFIGURATION EN NUAGE, PROCÉDÉ DE STOCKAGE DE CONFIGURATION EN NUAGE, ET PROGRAMME DE STOCKAGE DE CONFIGURATION EN NUAGE

(43) Date of publication of application: 01.11.2017
(73) Proprietor: Hitachi Systems, Ltd., Tokyo 141-8672 (JP)
(72) Inventor: IIKURA, Ken, Tokyo 141-8672 (JP); AKIYAMA, Hiroshi, Tokyo 141-8672 (JP); YOSHITAKE, Michiori, Tokyo 141-8672 (JP); KAWATO, Akifumi, Tokyo 141-8672 (JP)
(74) Representative: Hoffmann Eitle
(86) International application number: PCT/JP2014/084400
(87) International publication number: WO 2016/103422

(56) References cited:
- EP-A2- 1 443 700
- JP-A- 2007 318 553
- JP-A- 2011 238 073
- JP-A- 2013 008 089
- JP-A- 2013 081 053
- US-A1- 2003 093 709
- US-A1- 2014 010 109
- US-A1- 2014 280 311
- MASARU SUGAWARA ET AL.: 'Private-cloud management system with visualization technology for fast and simple operation' IEICE TECHNICAL REPORT vol. 109, no. 463, 04 March 2010, pages 93 - 98, XP008185233

## Description

### [Technical Field]

The present invention relates to a cloud-configuration storage system, a cloud-configuration storage method and a cloud-configuration storage program suitable for acquiring a configuration information of a cloud environment as of an arbitrary point of time, and managing a history thereof.

### [Background Art]

Recently, in the field of computer technology, a service of constructing a cloud environment using a combination of various virtualization techniques and providing the constructed cloud environment to users is spreading rapidly. In the cloud environment, it is necessary to allow the configuration to be apprehended, and since the configuration changes dynamically, it is necessary to store the information before and after the change to correspond to occurrence of failure or to improve performance.

Techniques disclosed in Patent Literatures 1 and 2 are examples of documents related to the above-described art. Patent Literature 1 discloses an art of generating a logical topology information of a virtual network related to a virtual network composed of virtualization techniques including a virtual LAN, a virtual interface, and a virtual router. Therefore, according to the art disclosed in Patent Literature 1, (1) a setting pattern related to the generation of multiple kinds of virtual resources and a setting pattern related to connections between the multiple kinds of virtual resources are extracted from setting information (configuration) on network apparatuses constituting the virtual network; (2) identifiers necessary to generate the virtual resources, or to generate connection relations between the virtual resources are extracted from the extracted setting pattern; (3) configuration components of a logical topology corresponding to the virtual resources or connections between the virtual resources are generated by using information which includes the extracted identifiers; and (4) the generated configuration components of individual logical topologies are integrated to generate logical topology information expressed as one topology, the information of which is stored in a storage.

The art disclosed in Patent Literature 2 provides a configuration information acquisition method in a cloud environment which implements an efficient monitoring operation while reducing the amount of data to be handled, by reducing a load to a physical server to be monitored in a system of the cloud environment, and an apparatus for implementing the method. The art of Patent Literature 2 includes the steps of collecting a mirrored packet from packets flowing between a plurality of virtual machines, analyzing traffic/route information from the collected packet; determining whether a corresponding relationship between a physical server and the virtual machines is changed, as a result of the analysis; instructing a monitoring device which monitors an entire configuration, to acquire configuration information when it is recognized that the corresponding relationship is changed; and acquiring and storing the configuration information in the monitoring device after the change.

Document EP 1 443 700 A2 discusses tracking and storing of configuration changes in manageable communication network entities having a configuration retrievable as a configuration command snapshot. Specifically, the techniques discussed throughout this document rely on an operator interacting with a roster to select a particular configuration command snapshot, optionally through a version identified.

Document US 2014/280311 A1 discusses efficiently managing communications between clients and servers in a cloud data exchanging system based on using table stored in an exchange database.

### [Citation List]

### [Patent Literature]

[PTL 1] Japanese Unexamined Patent Application Publication No 2013-081053
[PTL2] Japanese Unexamined Patent Application Publication No. 2012-004781

### [Summary of Invention]

### [Technical Problem]

According to the aforementioned technique, in a state where an infrastructure is constructed using a cloud environment of a plurality of cloud service providers, a large number of configuration changes occur in a short time, since the change of system configuration can be performed easily in a short time. Further, some cloud services are provided with a function to change a number of virtual servers automatically. Therefore, it is difficult to apprehend a configuration information as of a specific point of time compared to an on-premise environment where configuration change is not frequently performed.

Therefore, much time was required to specify and take measures against failure that has occurred immediately after the cloud environment has been changed. Further, since a history of the cloud environment cannot be stored, there was a problem in that a truly preferable cloud configuration capable of comparing a past cloud environment and a cloud environment after the change could not be constructed. Thus, the object of the present invention is to provide a system capable of apprehending a configuration of the cloud environment and storing a configuration change history.

### [Solution to Problem]

The mentioned problems are solved by the subject-matter of the independent claims. Further preferred embodiments are defined in the dependent claims. A cloud-configuration storage system according to one example is configured to connect to one or more cloud service provision systems providing a cloud service, the system including a client apparatus and a server apparatus, the client apparatus including a cloud connection information reception part configured to receive a cloud connection information constructing a cloud environment from a user, a configuration storage processing part configured to receive designation of the cloud environment to be stored, and a configuration history display processing part configured to perform display control of a configuration history of the cloud environment being stored, the server apparatus including a cloud connection information part configured to store and register the cloud connection information received by the cloud connection information reception part of the client apparatus in a cloud connection information DB, a configuration information acquisition processing part configured to acquire the cloud configuration information constructed in the cloud service provision system from the cloud service provision system according to a cloud configuration information acquisition request from the configuration display processing part of the client apparatus, a cloud configuration history DB configured to store the configuration information being acquired as a configuration history information, and a configuration history acquisition processing part configured to acquire a configuration history information from the cloud configuration history DB. The configuration storage processing part having received a cloud configuration storage command from the user is configured to extract a cloud ID for acquiring cloud configuration information from the cloud configuration display request command, and transmit the configuration display command of the extracted cloud ID to the configuration information acquisition processing part, wherein the configuration information acquisition processing part is configured to acquire a cloud connection information from the cloud connection information DB based on the cloud ID, specify a cloud service provision system acquiring the cloud configuration information based on the acquired cloud connection information, and acquire the cloud configuration information from the specified cloud service provision system and store the information in the cloud configuration history DB, and wherein the configuration history display processing part is configured to acquire a configuration history from the configuration information acquisition processing part based on a cloud information whose configuration is to be displayed received from the user, generate a cloud configuration diagram using a configuration component icon corresponding to each configuration element and a connection information based on the configuration history being acquired, and display the cloud configuration diagram being generated on the screen.

### [Advantageous Effects of Invention]

According to the present cloud-configuration storage system, configuration information on the cloud service can be acquired from the cloud service provider either periodically or when a change occurs, and stored in the configuration history DB. Therefore, a configuration information as of a specific point of time can be referred to, and replication of a cloud configuration of a current point of time or restoration of a past cloud configuration is enabled, and specification of cause of failure or specification of a performance bottleneck portion is enabled. The problems, configurations and effects other than those described above will become apparent based on the following description of embodiments.

### [Brief Description of Drawings]

[FIG. 1] FIG. 1 is a view illustrating an outline of invention in a cloud-configuration storage system according to one embodiment of the present invention.
[FIG. 2] FIG. 2 is a view illustrating an entire configuration of a system using the cloud-configuration storage system according to one embodiment of the present invention.
[FIG. 3] FIG. 3 is a block diagram illustrating an internal configuration of a client PC (client terminal).
[FIG. 4] FIG. 4 is a block diagram illustrating an internal configuration of a physical server.
[FIG. 5] FIG. 5 is a view illustrating a configuration example of a cloud connection information.
[FIG. 6] FIG. 6 is a view illustrating a configuration example of a cloud service configuration information.
[FIG. 7] FIG. 7 is a view illustrating a configuration example of a cloud configuration history table.
[FIG. 8] FIG. 8 is a view illustrating a configuration example of a cloud configuration component history table.
[FIG. 9] FIG. 9 is a flowchart illustrating a main processing of update of cloud configuration history.
[FIG. 10] FIG. 10 is a flowchart illustrating an acquisition processing of cloud configuration information and display processing of update history.
[FIG. 11] FIG. 11 is a flowchart illustrating an acquisition processing of cloud configuration information.
[FIG. 12] FIG. 12 is a flowchart illustrating a configuration history update processing of cloud configuration information of a configuration information acquisition processing part.
[FIG. 13] FIG. 13 is a flowchart illustrating a history display / restoration / replication processing of cloud configuration.
[FIG. 14] FIG. 14 is an image view illustrating a restoration of a cloud configuration.
[FIG. 15] FIG. 15 is an image view illustrating a replication of a cloud configuration.

### [Description of Embodiments]

Embodiments of the present invention will now be described with reference to the drawings. In the following description, various information are referred to as "management tables", for example, but the various information can also be expressed by data structures other than tables. Further, the "management table" can also be referred to as "management information" to indicate that the information does not depend on the data structure.

The processes are sometimes described using the term "program" as the subject. The program is executed by a processor such as an MP (Micro Processor) or a CPU (Central Processing Unit) for performing determined processes. A processor can also be the subject of the processes, since the processes are performed by a processor using appropriate storage resources (such as memories) and communication interface devices (such as communication ports). The processor can also use dedicated hardware in addition to the CPU. The computer programs can be installed to each computer from a program source. The program source can be provided via a program assignment server or storage media, for example.

Each element, such as each controller, can be identified by numbers, but other types of identification information such as names can be used as long as they are identifiable information. The equivalent elements are denoted with the same reference numbers in the drawings and the description of the present invention, but the present invention is not restricted to the present embodiments, and other modified examples in conformity with the idea of the present invention are included in the technical scope of the present invention. The number of each component can be one or more than one, unless defined otherwise.

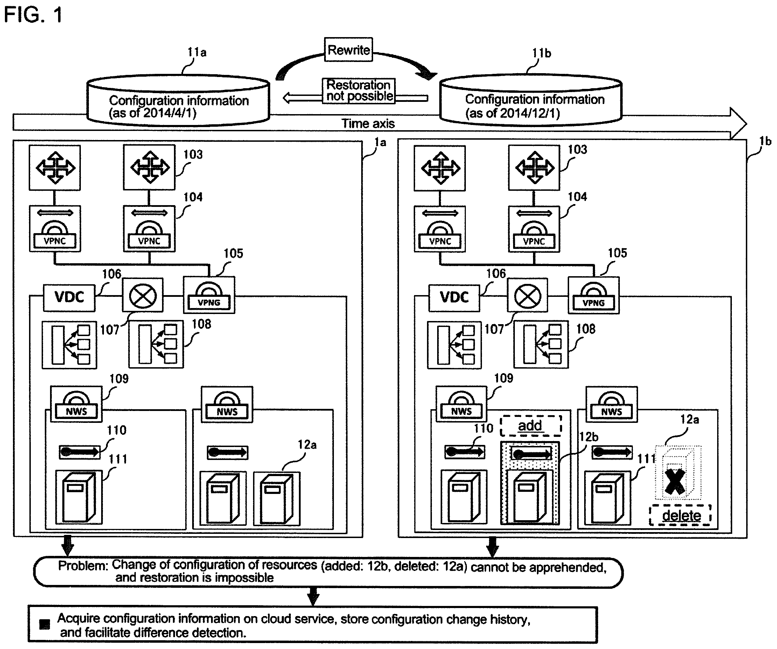

### <Outline of Invention> FIG. 1

FIG. 1 is a view illustrating an outline of the invention in a cloud-configuration storage system according to one embodiment of the present invention.

In constructing an intra-company infrastructure environment using a public cloud provided to an unspecified large number of general users through the Internet by a cloud provider (cloud service provider), it is necessary to use a standard tool unique to the cloud provider, and as a result of infrastructure environment of a cloud constructed by the standard tool, the respective configuration components (resources: such as server, network, and data center) are merely displayed in the form of a list.

Therefore, it was difficult to apprehend the connection states of the respective configuration components and the entire configuration. For example, a server list stores information of a data center (hereinafter abbreviated as DC) ID to which a server belongs and a network ID being connected, in addition to a server ID. Similarly, a network list stores information of the server ID being connected, in addition to a network ID. A DC list stores information of a server ID of the servers existing within the DC, in addition to the DC ID. Therefore, overview of the infrastructure configuration (relationship between resources) cannot be apprehended speedily from the lists.

It was necessary to copy lists and check the relationship between the respective IDs and the resources, in order to apprehend the overview of infrastructure configuration (relationship between resources), according to which errors and leaks of relationship between resources occurred, and the check required much time and workload.

The above-described problems can be solved by generating a visual configuration diagram illustrated in FIG. 1 by gathering information acquired from the cloud service providers, and using notation and icons that can be easily recognized and understood by a system administrator. However, if an infrastructure is configured of a cloud environment provided by a plurality of cloud service providers, a large amount of configuration change occurs in a short period of time, since change of system configuration can be performed easily in a short time. Some cloud services are equipped with a function to change the number of virtual servers automatically. Therefore, even through use of such a visual configuration diagram, it is difficult to apprehend the configuration information of a specific time point compared to an on-premises environment.

Actually, a cloud configuration as of 2014/4/1 in FIG. 1 is stored in a configuration information 11a and illustrated in a configuration diagram 1a. Further, the cloud configuration as of 2014/12/1 is stored in a configuration information 11b and illustrated in a configuration diagram 1b. The icons shown in the configuration diagram 1a and the configuration diagram 1b are a user connection 103, a VPN connection (VPNC) 104, a VPN gateway (VPNG) 105, a virtual DC 106, an internet gateway 107, a load balancer 108, a network segment (NWS) 109, a global IP 110, and a virtual server 111.

By comparing the cloud configuration as of 2014/4/1 with the cloud configuration as of 2014/12/1, a virtual server 12b is newly added, and a virtual server 12a is deleted in the cloud configuration as of 2014/12/1. However, the cloud configuration information as of 2014/4/1 has been rewritten by the cloud configuration information as of 2014/12/1, such that even if change of resource of cloud configuration has been performed, there was no means to detect that change. Further, it was not possible to restore a past cloud environment. Thus, there was a drawback that much workload and time was required to specify a failure occurrence location (access failure caused by frequent accesses to the deleted virtual server 12a), or analyzing causes.

Therefore, the present embodiment solves the problems described above by providing a cloud-configuration storage system that facilitates difference detection by acquiring configuration information of cloud services and storing a configuration change history.

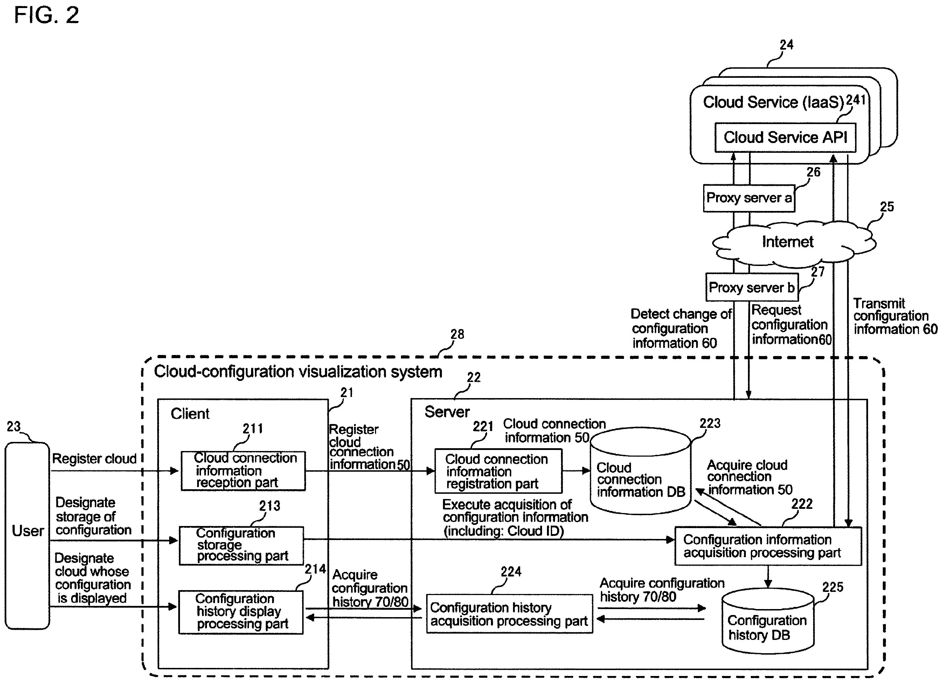

### <System Configuration> FIG. 2

FIG. 2 is a view illustrating an entire configuration of a system adopting the cloud-configuration storage system according to an embodiment of the present invention. The system is composed of a cloud-configuration storage system 28 and a cloud service (laaS: Infrastructure as a Service) 24. The cloud-configuration storage system 28 and the cloud service (laaS) 24 are connected via a network 25 such as a LAN (Local Area Network).

A cloud service API (Application Programming Interface) 241 in the drawing refers to a software for operating the cloud service (laaS) 24 provided by the cloud service provider. Further, cloud connection information 50 refers to information such as IDs and keys necessary for using the cloud service API 241. The configuration information 60 refers to information on resources (such as a virtual DC, a virtual server, and a virtual network) in the cloud service 24. The cloud service (laaS) 24 includes hardware resources such as a large number of server apparatuses, storage devices, and network devices, and software resources such as various OSs (Operating Systems) and APs (Application Programs), and the resources are provided virtually to the users.

The cloud-configuration storage system 28 is composed of a client PC (hereinafter abbreviated as client) 21, and a physical server (hereinafter abbreviated as server) 22. The client 21 has three function blocks called a cloud connection information reception part 211, a configuration storage processing part 213, and a configuration history display processing part 214.

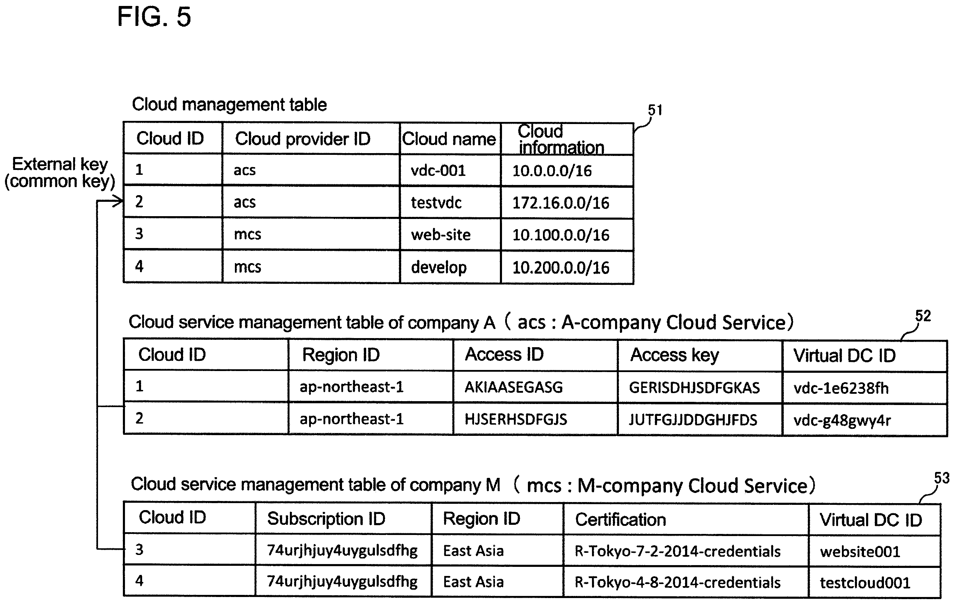

The cloud connection information reception part 211 is a function part for receiving registration of a cloud connection information 50 (refer to FIG. 5) for a user 23 to construct the infrastructure environment.

A configuration storage processing part 213 is a function part that receives from the user 23 a cloud information (such as cloud ID) whose configuration information 60 of cloud environment should be saved, and generates a storage request of the configuration information 60 to the server 22.

A configuration history display processing part 214 is a function part that receives a cloud information designated by the user 23 to have its configuration displayed, and displays the configuration information 60 of the cloud environment as a configuration viewer on a screen at an arbitrary time point. The configuration information 60 is acquired by the configuration display processing part 212 requesting execution of acquisition of configuration information 60 to a configuration information acquisition processing part 222 of the server 22.

The server 22 has five function blocks, a cloud connection information registration part 221, a configuration information acquisition processing part 222, a cloud connection information DB 223, a configuration history acquisition processing part 224, and a configuration history DB 225.

The cloud connection information registration part 221 is a function part for storing and saving a cloud connection information 50 received by the cloud connection information reception part 211 of the client 21 in the the cloud connection information DB 223.

The configuration information acquisition processing part 222 acquires the cloud connection information 50 stored in the the cloud connection information DB 223, and based on the acquired cloud connection information 50, requests acquisition of configuration information 60 with respect to the cloud service (laaS) 24, and acquires the configuration information 60. It is further equipped with a function to receive a change notice of configuration information 60 from a proxy server a 26 / proxy server b 27 or a cloud service (laaS) 24, to acquire the configuration information 60 as of that time point, and to store the acquired configuration information 60 in a configuration history DB 225. The cause of occurrence of change notice of configuration information 60 from the cloud service (laaS) 24 can be, for example, the automatic changing of number of virtual servers 111, as described earlier.

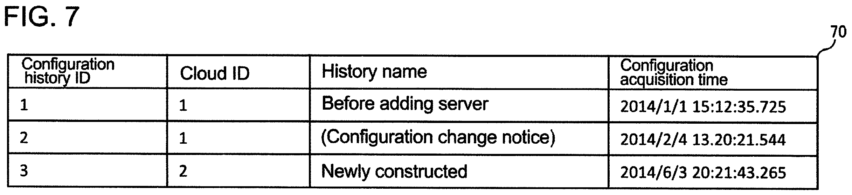

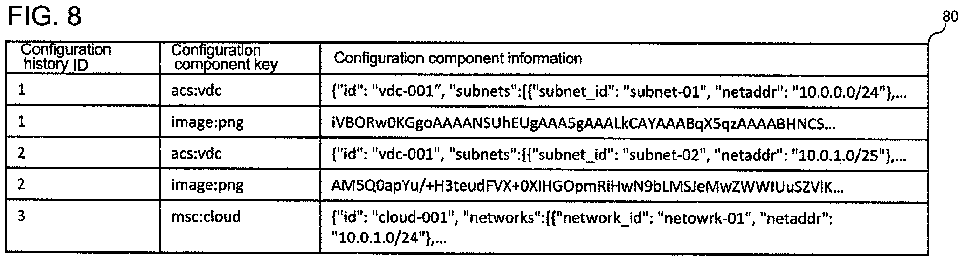

A configuration history acquisition processing part 224 has a function to acquire a configuration history information of a configuration history 70 (FIG. 7: cloud configuration history table) / configuration history 80 (FIG. 8: cloud configuration component history table) from the configuration history DB 225 based on a request from the configuration history display processing part 214 of the client 21, and transmit the acquired configuration history information to the configuration history display processing part 214.

The configuration history DB 225 is a storage function part that stores the configuration history information of the configuration history 70 (FIG. 7: cloud configuration history table) / configuration history 80 (FIG. 8: cloud configuration component history table) from the configuration information acquisition processing part 222, and the stored configuration history information is read as needed by the configuration history acquisition processing part 224.

The user 23 registers the cloud connection information 50, designates the cloud whose configuration of cloud environment should be stored, and designates the cloud whose configuration is to be displayed to the cloud-configuration storage system 28. The cloud-configuration storage system 28 acquires the configuration information 60 from the cloud service (laaS) 24 based on the received registration information and the designated information.

The user 23 can register a plurality of cloud services (laaS) 24 provided by different providers to constitute the infrastructure environment of the cloud. Therefore, the cloud-configuration storage system 20 can store configuration information 60 of different cloud environments, the configuration history 70 (cloud configuration history table), and the configuration history 80 (cloud configuration component history table). Therefore, the cloud-configuration storage system 28 has an acquisition function of the configuration information 60 of a plurality of cloud services (laaS) 24 of different providers, and a storage function and a display function of the configuration information 60. The detailed description will be described later.

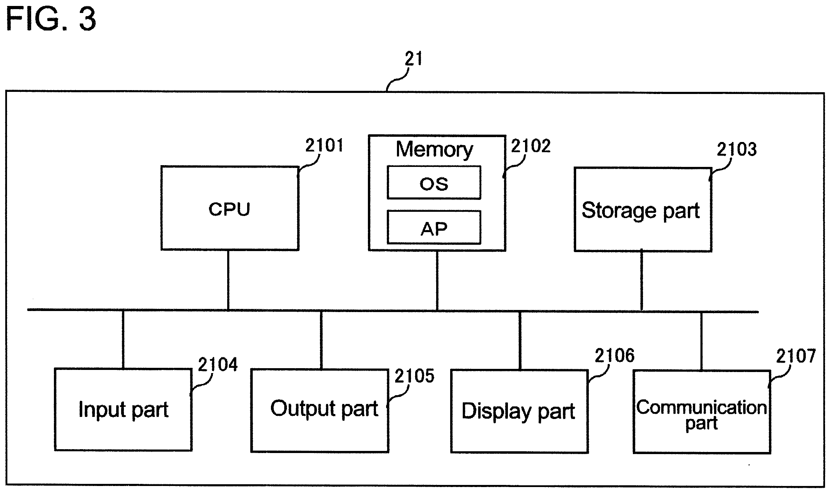

### <Internal Configuration of Client PC> FIG. 3

FIG. 3 is a block diagram illustrating an internal configuration of a client PC (client terminal).

The client 21 includes a CPU 2101, a memory 2102, a storage part 2103, an input part 2104, an output part 2105, a display part 2106, and a communication part 2107.

The CPU 2101 is a processor that controls the entire client 21. The memory 2102 is a device that temporarily stores various programs and various data described later. The storage part 2103 is a device that permanently stores various programs and various data described later.

The input part 2104 is a device that receives input, such as a keyboard or a mouse. The output part 2105 is a device that outputs information and data, such as a speaker or a printer.

The display part 2106 is a device that displays information and data, such as a liquid crystal display. The communication part 2107 is a device that connects the client 21 with other devices (such as the server 22 or the apparatus of the cloud service (laaS) 24) via a network. The above-described configuration components are mutually connected via an internal bus.

The memory 2102 stores various OSs provided by OS provision companies, and various APs operating on the various OSs.

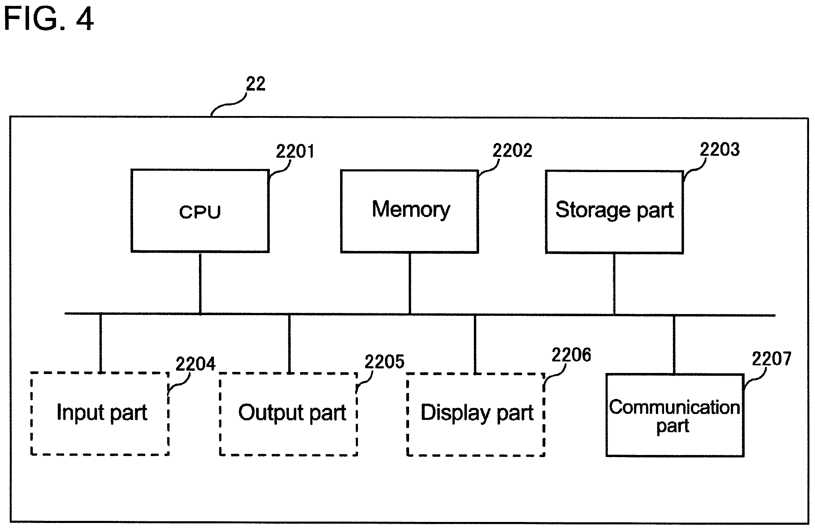

### <Internal Configuration of Physical Server> FIG. 4

FIG. 4 is a block diagram illustrating an internal configuration of a server. The server 22 includes a CPU 2201, a memory 2202, a storage part 2203, an input part 2204, an output part 2205, a display part 2206, and a communication part 2207.

The CPU 2201 is a processor that controls the entire server 22. The memory 2202 is a device that temporarily stores various programs and various data described later. The storage part 2203 is a device that permanently stores various programs and various data described later.

The input part 2204 is a device that receives input, such as a keyboard or a mouse. The output part 2205 is a device that outputs information and data, such as a speaker or a printer.

The display part 2206 is a device that displays information and data, such as a liquid crystal display. The communication part 2207 is a device that connects the server 22 with other devices (such as the client 21 or the apparatus of the cloud service (laaS) 24) via a network. The above-described configuration components are mutually connected via an internal bus.

The server 22 is not necessarily equipped with the input part 2204, the output part 2205 and the display part 2206 illustrated by the dotted lines, and in that case, the server 22 should merely have an interface to which these configuration components can be connected.

### <Cloud Connection Information> FIG. 5

FIG. 5 is a view illustrating a configuration example of a cloud connection information. The cloud connection information 50 is composed of a cloud management table 51, a cloud service management table of company A 52, and a cloud service management table of company M 53. The tables are provided to enable handling of multiple types of cloud services. Therefore, a table for managing the connection information 50 specific to each cloud service is provided for each cloud service, and information is stored and managed in each table.

The cloud management table 51 is composed of a cloud ID for uniquely identifying the cloud type, a cloud provider ID for uniquely identifying the type of the cloud provider (cloud service provider 24), a cloud name which is the name of the cloud being used, and a cloud information expressed in the form of an IP address serving as the connection information to the cloud. A predetermined information is stored in each entry corresponding to the cloud ID. For example, "acs" is stored as the cloud provider ID whose cloud ID is "1", "vdc-001" is stored in the cloud name, and "10.0.0.0/16" is stored as the cloud information as connection IP address information, and managed.

The cloud service management table of company A 52 is composed of a cloud ID for uniquely identifying the cloud type, a region ID for uniquely identifying the range of area managed by a cloud, an access ID for uniquely identifying the user 23, an access key used for access by the user 23, and a virtual DC_ID for uniquely identifying the virtual DC. A predetermined information is stored in each entry corresponding to the cloud ID. For example, "ap-northeast-1" is stored as the region ID whose cloud ID is "2", "HJSERHSDFGJS" is stored as the access ID, "JUTFGJJDDGHJFDS" is stored as the access key, and "vdc-g48gwy4r" is stored as the virtual DC_ID, and managed.

The cloud service management table of company M 53 is composed of a cloud ID for uniquely identifying the cloud type, a subscription ID for identifying the contents of the provided service, a region ID for uniquely identifying the range of area managed by the cloud, a certification information for using the cloud service, and a virtual DC_ID for uniquely identifying the virtual DC. Predetermined information is stored in each entry corresponding to the cloud ID. For example, "74urjhjuy4uygulsdfhg" is stored as the subscription ID where the cloud ID is "3", "East Asia" is stored as the region ID, "R-Tokyo-7-2-2014-credentials" is stored as the certification, and "website001" is stored as the virtual DC_ID, and managed.

In the cloud management table 51, the cloud ID is set as an external key (common key) to associate the cloud service management table of company A 52 and the cloud service management table of company M 53 for management.

As for the cloud connection information 50, the user 23 enters necessary information to the cloud connection information reception part 211 of the client 21, and the information is registered. Specifically, predetermined selection and input of information using a menu or input area displayed on the display part 2106 of the client 21 in FIG. 3 is performed form the input part 2104. Then, the CPU 2101 temporarily stores the cloud connection information 50 received through the input part 2104 in the memory 2102 or the storage part 2103. The registration operation of the cloud connection information is executed by the cloud connection information reception part 211 controlling the CPU 2101.

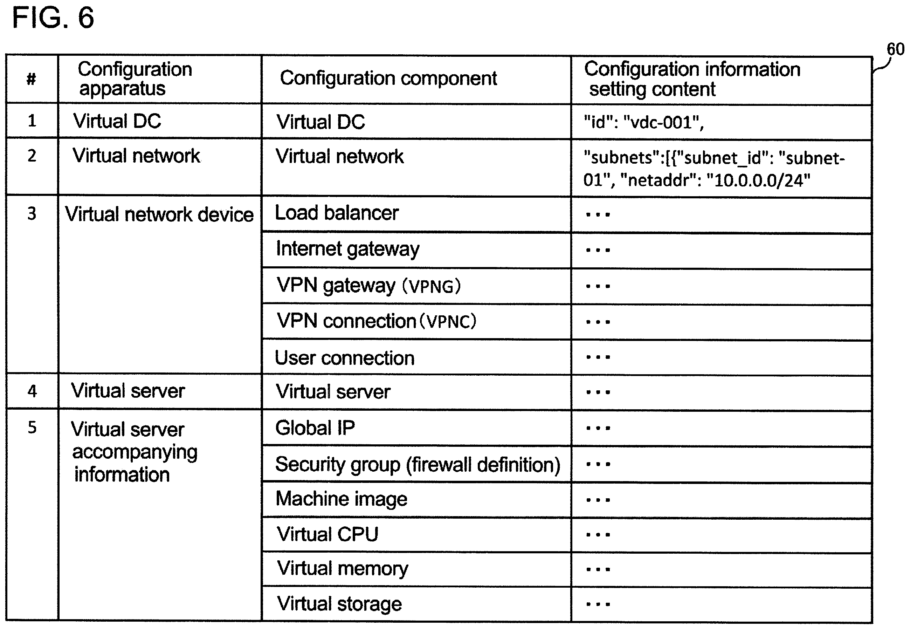

### <Cloud Service Configuration Information> FIG. 6

FIG. 6 is a view illustrating a configuration example of a cloud service configuration information. A cloud service configuration information 60 is information corresponding to the cloud ID in the configuration information acquisition request transmitted to the cloud service 24 from the configuration information acquisition processing part 222 of the cloud-configuration storage system 28.

The cloud service configuration information 60 (configuration information 60) is composed of an item number (#), a configuration apparatus, a configuration component, and a configuration information setting content. For example, regarding the virtual DC whose item number (#) is "1", based on the configuration information setting content, it can be recognized that the virtual DC_ID is "vdc-001". Further, according to this virtual DC, the setting content of the virtual network whose item number (#) is "2" is "subnets" :[{"subnet_id": "subnet-01", "netaddr" : "10.0.0.0/24", so that it can be recognized that the subnet_id is "subnet-01" and that it is connected to a network having a network address of "10.0.0.0/24".

In item number (#) "3" where the configuration apparatus is a "virtual network device", the configuration components are "load balancer", "Internet gateway", "VPN (Virtual Private Network) gateway", "VPN connection", and "user connection", and although not illustrated, the setting contents of the configuration information are stored in each configuration component. Although not illustrated, the aforementioned cloud ID information is added to the configuration information 60.

In the present embodiment, the configuration information 60 is stored in the configuration history DB 225 either periodically or each time a change occurs, such that restoration or replication the cloud environment is enabled.

### <Cloud Configuration History Table> FIG. 7

FIG. 7 is a view illustrating a configuration example of a cloud configuration history table. The cloud configuration history table 70 is a table that manages the configuration history in cloud units.

The cloud configuration history table 70 is composed of a configuration history ID, a cloud ID, a history name, and a configuration information acquisition time, and predetermined information for each new configuration or change of configuration is stored in the respective entries by the configuration information acquisition processing part 222. For example, "1" is stored as the cloud ID corresponding to the configuration history ID "1", "before adding server" is stored as the history name, and "2014/1/1 15:12:35.725" is stored as the configuration information acquisition time. Similarly, "1" is stored as the cloud ID corresponding to the configuration history ID "2", "(configuration change notice)" is stored as the history name, and information "2014/2/4 13:20:21.544" is stored as the configuration information acquisition time. Further, "2" is stored as the cloud ID corresponding to the configuration history ID "3", "newly constructed" is stored as the history name, and "2014/6/3 20:21:43.265" is stored as the configuration information acquisition time.

The cloud configuration component history table 80 described below is associated (linked) with the cloud configuration history table using the configuration history ID as an external key (common key), and stored in the configuration history DB 225 as cloud configuration history information.

### <Cloud Configuration Component History Table> FIG. 8

FIG. 8 is a diagram illustrating a configuration example of a cloud configuration component history table. A configuration component key refers to a character string indicating data (configuration component information) stored in a configuration component information string. Further, a configuration component refers to data, configuration information, configuration diagram files and the like constituting a configuration history. The types of configuration components linked to one configuration history differs according to a type of cloud service being stored.

Configuration components "acs:vdc" and "image:png" have configuration history ID "1". The configuration component information whose configuration history ID is "1" and configuration component is "acs:vdc" is "{"id":"vdc-001", "subnets": [{"subnet_id":"subnet-01", "netaddr": "10.0.0.0/24", ...", and this information is stored in the configuration history DB 225.

The configuration component information whose configuration history ID is "1" and configuration component is "image:png" is "iVBORw0KGgoAAAANSUhEUgAAA5gAAALkCAYAAABqX5qzAAAABHNCS...", and this information is stored in the configuration history DB 225.

The configuration component whose history ID is "2" is similar to the configuration components "acs:vdc" and "image:png" having configuration history ID "1". The reason is because the cloud ID whose configuration history ID is "1" and the cloud ID whose configuration history ID is "2" are the same, which is "1". The configuration component information whose configuration history ID is "2" and configuration component is "acs:vdc" is "{"id":"vdc-001", "subnets": [{"subnet_id":"subnet-02", "netaddr": "10.0.0.0/25", ...".

The configuration component information whose configuration history ID is "2" and configuration component is "image:png" is "AM5Q0apYu/+H3teudFVX+0XIHGOpmRiHwN9bLMSJeMwZWWIUuSZVIK...". As described, the information of the state in which the configuration history ID has been changed from "1" is stored in the configuration component information whose configuration history ID is "2", and stored in the configuration history DB 225. Thereby, even after the change of cloud environment, the cloud configuration can be returned to the environment before the change.

### <Processing Flow>

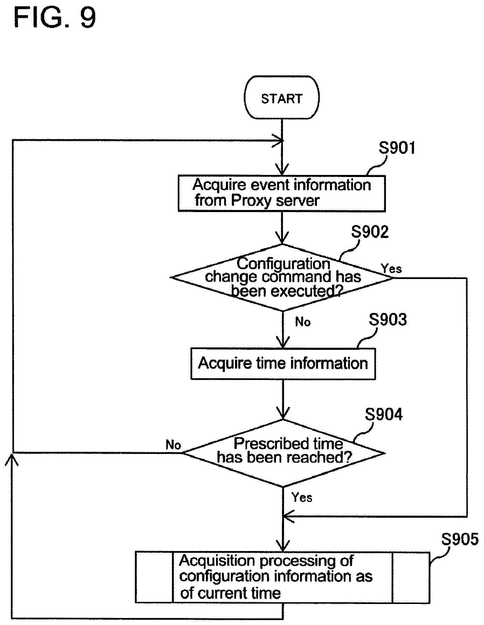

### <Main Processing of Updating Cloud Configuration History> FIG. 9

FIG. 9 is a flowchart illustrating a main processing for updating a cloud configuration history. The subject of the processing is the function part of the client 21 or the server 22, but it can also be a CPU 2101 of the client 21 or a CPU 2201 of the server 22.

In S901, the configuration information acquisition processing part 222 acquires an event information from a proxy server 26/27. The event can be a configuration change, construction of a new cloud, acquisition of configuration information, and so on.

In S902, the configuration information acquisition processing part 222 determines whether a configuration change command has been executed. The configuration change command includes a command for constructing a new cloud mentioned earlier. If it is determined that a configuration change command has been executed (S902: Yes), the configuration information acquisition processing part 222 executes S905, and if it is determined that the command has not been executed (S902: No), it executes S903.

In S903, the configuration information acquisition processing part 222 acquires a time information from a timer (not shown) of the server 22 or the like.

In S904, the configuration information acquisition processing part 222 determines whether a prescribed time (acquisition time of configuration information) has been reached. If a prescribed time has been reached (S904: Yes), the configuration information acquisition processing part 222 executes S905, and if the time has not been reached (S904: No), the processes of S901 and thereafter are executed again.

In S905, the configuration information acquisition processing part 222 executes an acquisition processing of the configuration information 60 at the current point of time.

According to the above-described processing, the history of the configuration information 60 can be stored and saved in the configuration history DB 225.

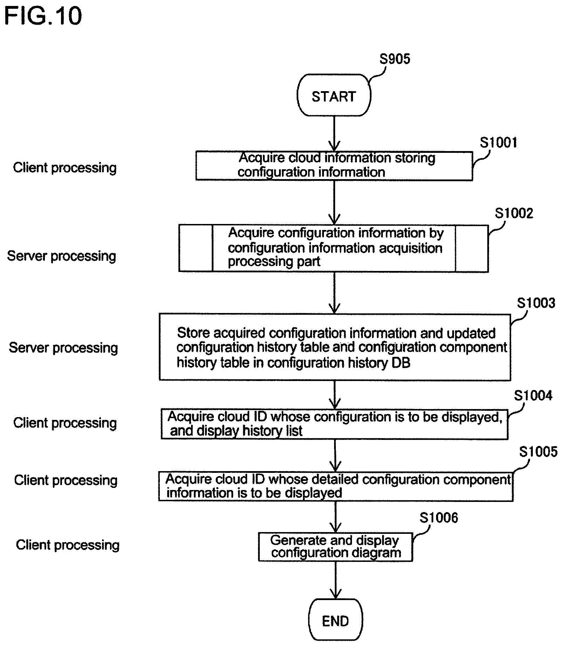

### <Configuration Information Acquisition Processing> FIGs. 10-12

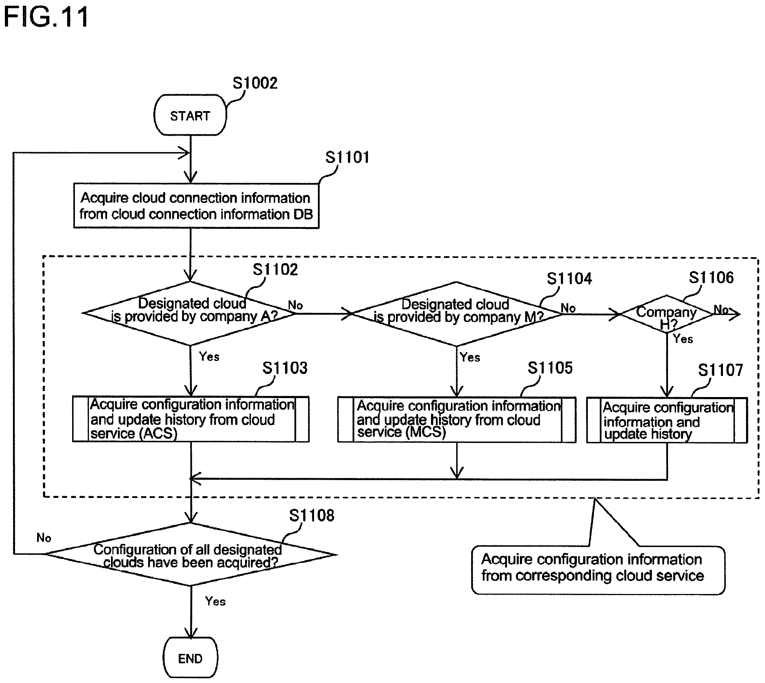

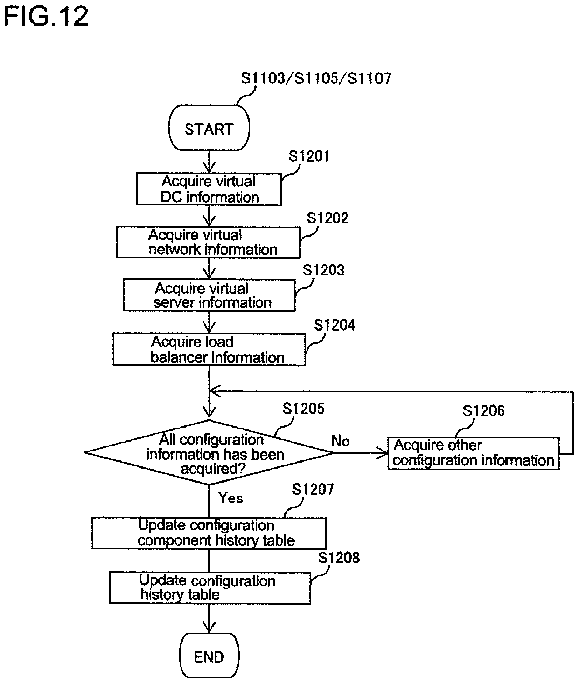

FIG. 10 is a flowchart illustrating an acquisition processing of cloud configuration information and display processing of update history. FIG. 11 is a flowchart illustrating and acquisition processing of cloud configuration information in the configuration information acquisition processing part. FIG. 12 is a flowchart illustrating a configuration history update processing of cloud configuration information in the configuration information acquisition processing part. The subject of the processing is the function part of the client 21 or the server 22, but it can also be the CPU 2101 of the client 21 or the CPU 2201 of the server 22.

In S1001 of FIG. 10, the configuration storage processing part 213 acquires the cloud information storing the configuration information 60 selected by the user 23. Specifically, a virtual DC_ID (cloud ID) is entered in the screen of a display portion 2106, and an input part 2104 receives the information on the virtual DC_ID and transfers the information to the configuration storage processing part 213.

In S1002, the configuration storage processing part 213 transmits the virtual DC_ID (cloud ID) to the configuration information acquisition processing part 222 of the server 22, and requests acquisition of the configuration information 60. The configuration information acquisition processing part 222 executes the acquisition processing of configuration information. The acquisition processing of the configuration information 60 relates to executing a subroutine processing illustrated in FIG. 11.

In S1003, the configuration storage processing part 213 stores the acquired configuration information 60, the updated configuration history table 70 and configuration component history table 80 in the configuration history DB 225. Then, the configuration storage processing part 213 transmits the stored configuration information 60, the configuration history table 70 and the configuration component history table 80 to the configuration history acquisition processing part 224.

In S1004, the configuration history display processing part 214 acquires the cloud ID displaying the configuration selected by the user 23. The configuration history display processing part 214 transmits the acquired cloud ID to the configuration history acquisition processing part 224, and acquires a history list information. The configuration history display processing part 214 displays the acquired history list information on the screen of the display portion 2106.

In S1005, in the configuration history display processing part 214, the user 23 selects the cloud ID whose detailed configuration component information is to be displayed from the history list displayed on the screen, and selects the cloud ID using a keyboard or a mouse of the input part 2104. The configuration history display processing part 214 acquires the selected cloud ID, and transmits the cloud ID to the configuration history acquisition processing part 224. The configuration history acquisition processing part 224 acquires a predetermined configuration information, the configuration history table 70 and the configuration component history table 80 based on the received cloud ID from the configuration history DB 225, and transmits the same to the configuration history display processing part 214.

In 1006, the configuration history display processing part 214 generates a configuration diagram based on the received configuration information, the configuration history table 70 and the configuration component history table 80, and displays the generated configuration diagram on the screen of the display portion 2106.

The above-described processing enables to store the configuration information 60 and the information in the configuration history table 70 and the configuration component history table 80 as of an arbitrary point of time.

In S1101 of FIG. 11, the configuration information acquisition processing part 222 of the server 22 acquires a cloud connection information 50 from the cloud connection information DB 223 based on the received virtual DC_ID (cloud ID).

In S1102, the configuration information acquisition processing part 222 determines whether the designated cloud is provided by company A, based on a cloud provider ID corresponding to the designated cloud ID. If the designated cloud is provided by company A (S1102: Yes), the configuration information acquisition processing part 222 executes S1103, and if not (S1102: No), executes S1104.

In S1103, the configuration information acquisition processing part 222 transmits an acquisition request of the configuration information 60 to a cloud service (ACS), and acquires the configuration information 60 in the cloud service (ACS).

In S1104, the configuration information acquisition processing part 222 determines whether the designated cloud is provided by company M, based on the cloud provider ID corresponding to the designated cloud ID. If the designated cloud is provided by company M (S1104: Yes), the configuration information acquisition processing part 222 executes S1105, and if not (S1104: No), executes S1105.

In S1105, the configuration information acquisition processing part 222 transmits an acquisition request of configuration information 60 to the cloud service (MCS), and acquires the configuration information 60 according to the cloud service (MCS).

In S1106, the configuration information acquisition processing part 222 determines whether the designated cloud is provided by company H, based on the cloud provider ID corresponding to the designated cloud ID. If the designated cloud is provided by company M (S1106: Yes), the configuration information acquisition processing part 222 executes S1107, and if not (S1106: No), determines whether the cloud is provided by a cloud service provider other than companies A, M and H.

In S1107, the configuration information acquisition processing part 222 transmits an acquisition request of the configuration information 60 to the cloud service provided by company H, and acquires the configuration information 60 according to the cloud service of company H.

In S1108, the configuration information acquisition processing part 222 determines whether the configuration information of all designated clouds have been acquired. If the configuration information of al designated clouds has been acquired (S1108: Yes), the configuration information acquisition processing part 222 executes S1109, and if not (S1108: No), executes the processing of S1101 and thereafter.

Next, the details of acquisition processing of configuration information in S1103, S1105, and S1107 are described with reference to FIG. 12.

In S1201 of FIG. 12, the configuration information acquisition processing part 222 acquires configuration apparatuses of the configuration information 60 and a configuration information setting content of the configuration component corresponding to a virtual DC (item number (#) "1").

In S1202, the configuration information acquisition processing part 222 acquires configuration apparatuses of the configuration information 60 and a configuration information setting content of the configuration component corresponding to a virtual network (item number (#) "2").

In S1203, the configuration information acquisition processing part 222 acquires a configuration information setting content corresponding to a virtual server (item number "4").

In S1204, the configuration information acquisition processing part 222 acquires a configuration information setting content of a virtual network equipment (item number (#) "3") and the configuration component corresponds to a load balancer.

In S1205, the configuration information acquisition processing part 222 determines whether all configuration information has been acquired. If not all configuration information has been acquired (S1205: No), the configuration information acquisition processing part 222 executes S1206, and if all has been acquired (S1205: Yes), the processing is returned to any one of the call destination processes S1103, S1105 and S1107.

In S1206, the configuration information acquisition processing part 222 acquires the configuration information of other configuration apparatuses or configuration components, and executes the processing of S1205 again.

In S1207, the configuration information acquisition processing part 222 updates the configuration component history table 80 by the acquired configuration information 60.

In S1208, the configuration information acquisition processing part 222 updates the configuration history table 70 based on the acquired configuration information 60 and the updated configuration component history table 80. Then, the configuration information acquisition processing part 222 returns the processing to a subroutine call destination (any one of S1103, S1105 and S1107).

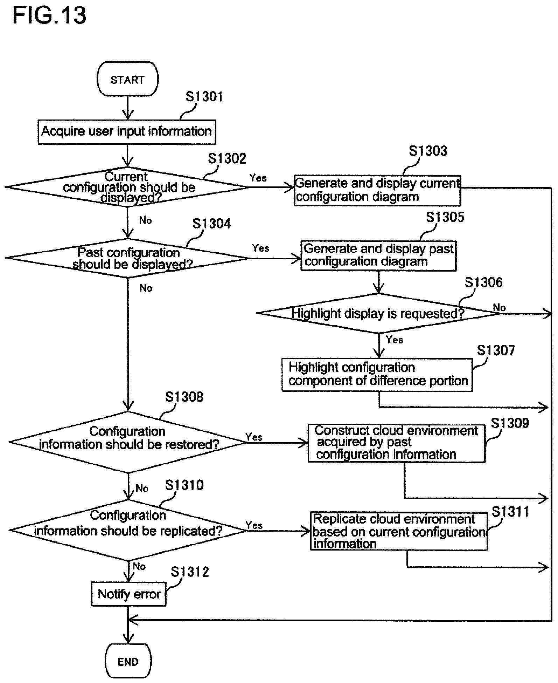

Based on the processing of FIGs. 10 to 12, the configuration information 60 and the information of the configuration history table 70 and the configuration component history table 80 as of an arbitrary point of time can be stored and saved in the configuration history DB 225. Therefore, restoration to a past cloud environment and replication of a cloud environment as of a current point of time is enabled. The detailed processing will be described with reference to FIG. 13.

### <History Display / Restoration / Replication Processing of Cloud Configuration> FIG. 13

FIG. 13 is a flowchart illustrating a history display / restoration / replication processing of a cloud configuration. The subject of the processing is the configuration history display processing part 214, but it can also be the CPU 2101 of the client 21.

In S1301, the configuration history display processing part 214 acquires the input information that the user has entered through the input part 2104, that is, the cloud ID to be displayed and the configuration history ID indicating the point of time of the configuration.

In S1302, the configuration history display processing part 214 determines based on the acquired configuration history ID whether to display the configuration as of the current point of time. The configuration at the current point of time can be judged based on whether the configuration history ID is the youngest of the cloud ID. If the configuration as of the current point of time is to be displayed (S1302: Yes), the configuration history display processing part 214 executes S1303, and if not (S1302: No), executes S1304.

In S1303, the configuration history display processing part 214 acquires and generates the configuration diagram at the current point of time by acquiring configuration information 60 from the configuration history DB 225, displays the generated configuration diagram on the screen of the display portion 2106, and ends the processing.

In S1304, if the past configuration is to be displayed (S1304: Yes), the configuration history display processing part 214 executes S1305, and if not (S1304: No), it executes S1308.

In S1305, the configuration history display processing part 214 acquires the configuration information 60, the information of the configuration history table 70 and the configuration component history table 80 from a history DB 225 to construct a configuration diagram as of a requested past point of time. The configuration history display processing part 214 generates a configuration diagram from the acquired information, and displays the generated configuration diagram on the screen of the display portion 2106.

Then, in S1306, the configuration history display processing part 214 determines whether a highlight display of difference with the current configuration is requested. If requested (S1306: Yes), the configuration history display processing part 214 executes S1307, and if not (S1306: No), ends the processing.

In S1307, the configuration history display processing part 214 executes a difference portion, highlights the extracted configuration component, and ends the processing. According to the processing of steps S1301 through S1307, the user can confirm the difference in configuration between the past cloud environment and the current cloud environment described in FIG. 1 on the screen. The difference portion can be apprehended precisely by highlighting (meshing) only the difference portions.

In S1308, the configuration history display processing part 214 determines whether restoration of the configuration information is requested. If restoration is requested (S1308: Yes), the configuration history display processing part 214 executes S1309, and if not (S1308: No), it ends the processing.

In S1309, the configuration history display processing part 214 constructs the cloud environment based on past configuration information, and displays the configuration diagram on the screen.

In S1310, the configuration history display processing part 214 determines whether replication of configuration information is requested. If replication is requested (S1310: Yes), the configuration history display processing part 214 executes S1311, and if not (S1310: No), it executes S1312.

In S1311, the configuration history display processing part 214 executes replication of cloud environment based on the current configuration information, displays the configuration diagram on the screen, and ends the processing.

In S1312, the configuration history display processing part 214 notifies an error to the user 23, and ends the processing. The error notice is transmitted and displayed on the display portion 2106, such as in a case where there is no corresponding cloud environment for the entered cloud ID, and the error is notified to the user.

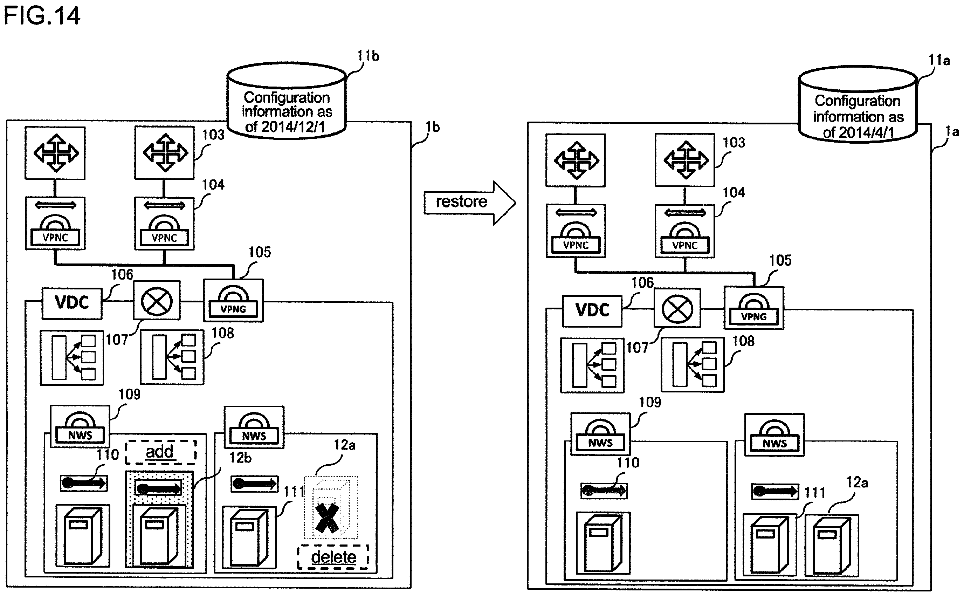

### <Restoration Image of Cloud Configuration> FIG. 14

FIG. 14 is an image diagram illustrating a restoration of a cloud configuration. The present image view illustrates a case where a configuration information 11b (configuration diagram 1b) as of a current point of time 2014/12/1 is returned to a configuration information 11a (configuration diagram 1a) as of a past point of time 2014/4/1. According to the configuration information 11 b (configuration diagram 1b) as of 2014/12/1, the virtual server 12a is deleted, and a virtual server 12b is newly added. The configuration is returned to the configuration information (configuration diagram 1a) as of 2014/4/1 where the deletion and addition of the virtual servers are not performed. As described, the current cloud environment can be returned to the past cloud environment by executing the processing of FIG. 13 described earlier. It is also possible to simultaneously display the configuration information 11b (configuration diagram 1b) and the configuration information 11a (configuration diagram 1a) on the screen for comparison.

According to the example of FIG. 14, the configuration information 11b (configuration diagram 1 b) as of current point of time 2014/12/1 is returned to the configuration information 11a (configuration diagram 1a) as of a past point of time 2014/4/1, and the operation is illustrated. Although not illustrated, it is possible to return the configuration to an older point of time, such as to a point of time of 2014/2/1, and it is also possible to display the configuration information 11a (configuration diagram 1a) as of 2014/4/1 and the configuration information as of 2014/2/1 at the same time.

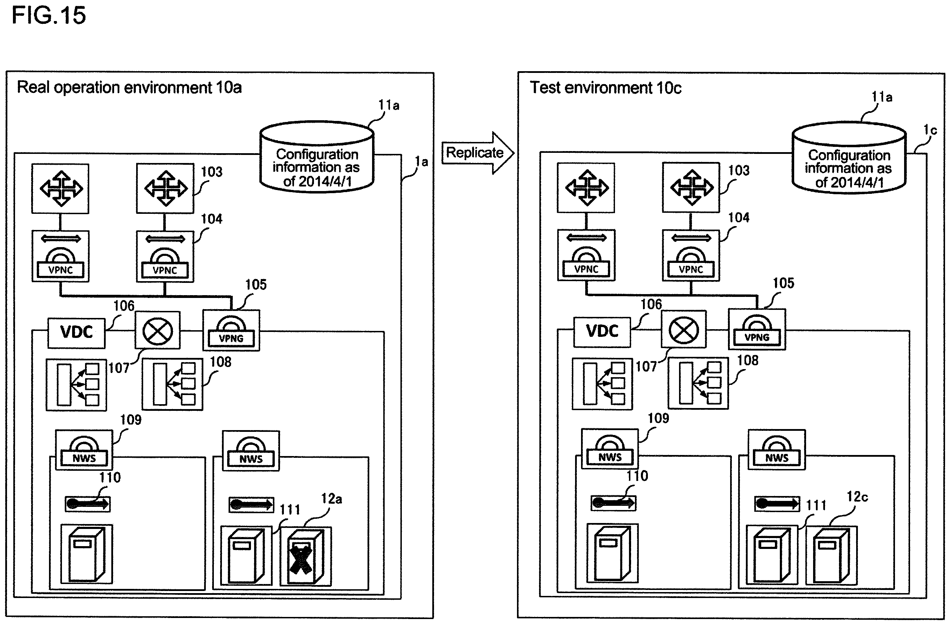

### <Replication Image of Cloud Configuration> FIG. 15

FIG. 15 is an image view illustrating a replication of cloud configuration. The present view illustrates a case in which a failure has occurred to the virtual server 12a in the configuration information 11a (configuration diagram 1a) of a real operation environment 10a as of 2014/4/1, and that an identical cloud environment is replicated and a test environment 10c is constructed, in order to specify a cause of failure and to perform countermeasures. The components other than the virtual server 12a are operating normally, so the real operation environment 10a continues to operate. The replicated test environment 10c adopts an identical configuration and executes identical operations as the real operation environment 10a to specify the cause of failure and to take countermeasures. Thereby, the cause of failure can be specified and countermeasures can be taken by without stopping the operating environment. Thus, replication of the current cloud environment is enabled by executing the processing of FIG. 13 described earlier.

As described above, according to the cloud-configuration storage system, the difference between a past cloud environment and a current cloud environment can be confirmed. The difference can be apprehended precisely by highlighting only the difference portions. Moreover, since the current cloud environment can be returned to the past cloud environment, and a cloud environment having an identical configuration as the real operation environment 10a can be replicated, cause of failure can be specified and countermeasures can be taken without stopping the operating environment.

The present invention is not restricted to the above-illustrated preferred embodiments, and can include various modifications. The above-illustrated embodiments are described in detail to help understand the present invention, and the present invention is not restricted to a structure including all the components illustrated above. Further, a portion of the configuration of an embodiment can be replaced with the configuration of another embodiment, or the configuration of a certain embodiment can be added to the configuration of another embodiment. Moreover, a portion or all of the configurations of each embodiment can be added to, deleted from or replaced with other configurations. The configurations and functions described above can be realized through software by having a processor interpret and execute programs for realizing the respective functions. The respective configurations, functions and the like described above can be realized by software by the processor interpreting and executing programs for realizing the respective functions.

The information such as the programs, tables and files for realizing the respective functions can be stored in storage devices such as memories, hard disks or SSDs (Solid State Drives), or in memory media such as IC cards, SD cards or DVDs. Only the control lines and information lines considered necessary for description are illustrated in the drawings, and not necessarily all the control lines and information lines required for production are illustrated. In actual application, it can be considered that almost all the components are mutually coupled.

### [Reference Signs List]

1: Configuration viewer screen, 11: configuration information, 21: client, 22: server, 24: cloud service (laaS), 26/27: proxy server, 28 cloud configuration storage system, 50: cloud connection information, 51: cloud management table, 52: cloud service management table of company A, 53: cloud service management table of company M, 60: cloud service configuration information, 70: cloud configuration history table, 80: cloud configuration component history table, 103: user connection, 104:VPN connection, 105: VPN gateway, 106: virtual DC, 107: Internet gateway, 108: load balancer, 109: network segment, 110: global IP, 111: virtual server, 211: cloud connection information reception part, 213: configuration storage processing part, 214: configuration history display processing part, 221: cloud connection information registration part, 222: configuration information acquisition processing part, 223: cloud connection information DB, 224: configuration history acquisition processing part, 225: configuration history DB, 241: cloud service API.

## Claims

1. A cloud-configuration storage system (28) configured to connect to one or more cloud service provision systems (24) providing a cloud service (laaS), the system comprising:
a client apparatus (21) and a server apparatus (22),
the client apparatus (21) comprising
a cloud connection information reception part (211) configured to receive from the user a cloud connection information (50) referring to information necessary for using the cloud service for constructing a cloud environment,
a configuration storage processing part (213) configured to receive designation of the cloud environment to be stored, and
a configuration history display processing part (214) configured to perform display control of a configuration history of the cloud environment being stored,
the server apparatus (22) comprising
a cloud connection information part (221) configured to store and register the cloud connection information (50) received by the cloud connection information reception part (211) of the client apparatus (21) in a cloud connection information DB (223),
a configuration information acquisition processing part (222) configured to acquire the cloud configuration information (60) constructed in the cloud service provision system (24) from the cloud service provision system according to a cloud configuration information acquisition request from the configuration display processing part (214) of the client apparatus (21),
a cloud configuration history DB (225) configured to store the configuration information being acquired (60) as a configuration history information (70,80), and
a configuration history acquisition processing part (224) configured to acquire a configuration history information (70,80) from the cloud configuration history DB (225),
wherein the configuration storage processing part (213) having received a cloud configuration storage command from the user is configured to
extract a cloud ID for acquiring cloud configuration information (60) from the cloud configuration display request command, and
transmit (S1002) the configuration display command of the extracted cloud ID to the configuration information acquisition processing part (222),
wherein the configuration information acquisition processing part (222) is configured to
acquire a cloud connection information (50) from the cloud connection information DB (223) based on the cloud ID,
specify a cloud service provision system (24) acquiring the cloud configuration information (60) based on the acquired cloud connection information (50), and
acquire the cloud configuration information (60) from the specified cloud service provision system (24) and store the information in the cloud configuration history DB (225), and
wherein the configuration history display processing part (214) is configured to
acquire a configuration history from the configuration information acquisition processing part (222) based on a cloud information whose configuration is to be displayed received from the user,
generate a cloud configuration diagram (1a,1b) using a configuration component icon corresponding to each configuration element and a connection information based on the configuration history being acquired, and
display the cloud configuration diagram (1a,1b) being generated on the screen.

2. The cloud-configuration storage system according to claim 1, wherein the client apparatus (21) or the server apparatus (22) comprises
a CPU (2101,2201) configured to control an entire apparatus,
a memory (2102,2202) configured to store information temporarily,
a storage part (2103,2203) configured to store information permanently, and
one or more of a communication part (2107,2207) configured to control communication with an external device, an input part (2014,2204) configured to receive information from outside, an output part configured to output information to the external device, and a display part configured to display information.

3. The cloud-configuration storage system according to claim 2, wherein the cloud connection information (50) includes at least a cloud ID configured to uniquely identify the cloud environment, a cloud provider ID configured to uniquely identify the cloud service provision system, a cloud name, and a network connection information to the cloud.

4. The cloud-configuration storage system according to claim 3,
wherein the cloud configuration information (60) is composed of a cloud ID, a configuration apparatus, a configuration component, and a configuration information setting content,
the configuration apparatus at least includes a virtual data center name, a virtual network name, a virtual network equipment name, a virtual server name, and a virtual server associated information,
the configuration component corresponding to the virtual network equipment name at least includes configuration components of a load balancer, an Internet gateway, a VPN gateway, a VPN connection, and a user connection,
the configuration component corresponding to the virtual server associated information at least includes configuration components of a global IP, a security group, a machine image, a virtual CPU, a virtual memory, and a virtual storage, and
an icon for each configuration apparatus or configuration component is generated, and a configuration diagram is generated.

5. The cloud-configuration storage system according to claim 4,
wherein the configuration history display processing part (214) is configured to
acquire a configuration history as of a point of time designated by the user from the cloud configuration history DB (225),
generate a configuration diagram from the configuration history (70,80), and display the configuration diagram being generated.

6. The cloud-configuration storage system according to claim 5,
wherein the configuration history display processing part (214) is configured to generate a configuration diagram based on a configuration history (70,80) as of a plurality of points of time designated by the user, and simultaneously display a plurality of the configuration diagrams being generated.

7. The cloud-configuration storage system according to claim 4,
wherein the configuration history display processing part (214) is configured to acquire a configuration history (70,80) as of a point of time designated by the user from the cloud configuration history DB,
replicate the configuration history, and
generate and display a configuration diagram based on the configuration history being replicated.

8. The cloud-configuration storage system according to claim 5,
wherein the configuration history display processing part (214) is configured to generate configuration diagrams based on a configuration history (70,80) corresponding to the point of time designated by the user and based on the configuration history being replicated, and simultaneously display the plurality of configuration diagrams being generated.

9. The cloud-configuration storage system according to claim 1, wherein:
the configuration information acquisition processing part further comprises:
a processing part configured to acquire, based on the cloud ID, the cloud connection information (50) from a cloud connection information DB (223,S1101),
a first cloud determination processing part configured to determine whether or not a cloud designated by a cloud provider ID corresponding to the specified cloud ID is provided by a first company (S1102),
a first configuration information acquisition processing part configured to send, in a case where the designated cloud is provided by the first company, an acquisition request for the configuration information to a first cloud service, obtain first configuration information from the first cloud service, and update a configuration history (S1103),
a second cloud determination processing part configured to determine, in a case where the designated cloud is not provided by the first company, whether or not a cloud designated by a cloud provider ID corresponding to the specified cloud ID is provided by a second company (S1104),
a second configuration information acquisition processing part configured to send, in a case where the designated cloud is provided by the second company, an acquisition request for second configuration information to the second cloud service, obtain the second configuration information from the second cloud service, and update a configuration history (S1105), and
a third cloud determination processing part configured to determine whether or not the first and second configuration information of all designated clouds has been acquired (S1108); and
the configuration history display (214) processing part further comprises:
a processing part configured to acquire a cloud ID to be displayed from the input information input by the use from the input part and a configuration history ID indicating a configuration of which time should be displayed (S1301),
a processing part configured to determine whether or not to display a current configuration based on the acquired configuration history ID (S1302),
a processing part configured to acquire, in a case of displaying the current configuration, configuration information from the configuration history DB, generate a current configuration image, and display the generated current configuration image on a screen of the display part (S1303),
a processing part configured to determine, in a case of not displaying the current configuration, whether or not to display a past configuration image (S1304),
a processing part configured to acquire, in a case of displaying a past configuration image, configuration information, a configuration history table, and configuration element history table information from the information history DB, generate a configuration image from the acquired information, and display the generated configuration image on a screen of the display part (S1305),
a processing part configured to extract a difference portion of configuration elements between the current configuration image and the past configuration image, and highlight the extracted configuration elements (S1307),
a processing part configured to determine whether or not restoration of the configuration information is requested (S1308),
a processing part configured to construct, in a case where restoration of the configuration information is requested, the cloud environment using the past configuration information and display a configuration image thereof on a screen of the display part (S1309),
a processing part configured to determine, in a case where restoration of the configuration information is not requested, whether or not copying of the configuration information is requested (S1310),
a processing part configured to execute, in a case where copying of the cloud environment is requested, a copy of the cloud environment using current configuration information, display a configuration image thereof on a screen, and end processing (S1311); and
a processing part configured to transmit, in a case that copying of the configuration information is not requested, an error notification to a user and end processing (S1312).

10. A cloud-configuration storage method of a cloud-configuration storage system configured to connect to one or more cloud service provision systems providing a cloud service, the cloud-configuration storage system comprising:
a client apparatus (21) and a server apparatus (22),
the client apparatus comprising
a cloud connection information reception part configured to receive a cloud connection information (50) referring to information necessary for using the cloud service, constructing a cloud environment from a user,
a configuration storage processing part configured to receive designation of the cloud environment to be stored, and
a configuration history display processing part configured to perform display control of a configuration history of the cloud environment being stored,
the server apparatus comprising
a cloud connection information part configured to store and register the cloud connection information (50) received by the cloud connection information reception part of the client apparatus in a cloud connection information DB,
a configuration information acquisition processing part configured to acquire the cloud configuration information constructed in the cloud service provision system from the cloud service provision system according to a cloud configuration information acquisition request from the configuration display processing part of the client apparatus,
a cloud configuration history DB configured to store the configuration information being acquired as a configuration history information, and
a configuration history acquisition processing part configured to acquire a configuration history information from the cloud configuration history DB,
wherein the configuration storage processing part (213) having received a cloud configuration storage command from the user is configured to execute the following steps of
extracting a cloud ID for acquiring cloud configuration information from the cloud configuration display request command, and
transmitting a configuration information acquisition command of the extracted cloud ID to the configuration information acquisition processing part,
wherein the configuration information acquisition processing part (222) is configured to execute the following steps of
acquiring a cloud connection information from the cloud connection information DB based on the cloud ID,
specifying a cloud service provision system acquiring the cloud configuration information based on the acquired cloud connection information, and
acquiring the cloud configuration information from the specified cloud service provision system and storing the information in the cloud configuration history DB, and
wherein the configuration history display processing part (214) is configured to execute the following steps of
acquiring a configuration history from the configuration information acquisition processing part based on a cloud information whose configuration is to be displayed received from the user,
generating a cloud configuration diagram using a configuration component icon corresponding to each configuration element and a connection information based on the configuration history being acquired, and
displaying the cloud configuration diagram being generated on the screen.

11. A cloud-configuration storage program of a cloud-configuration storage system configured to connect to one or more cloud service provision systems providing a cloud service, the cloud-configuration storage system comprising:
a client apparatus (21) and a server apparatus,
the client apparatus comprising
a cloud connection information reception part configured to receive a cloud connection information (50) referring to information necessary for using the cloud service, constructing a cloud environment from a user,
a configuration storage processing part (211) configured to receive designation of the cloud environment to be stored, and
a configuration history display processing part (214) configured to perform display control of a configuration history of the cloud environment being stored,
the server apparatus (22) comprising
a cloud connection information part configured to store and register the cloud connection information received by the cloud connection information reception part (211) of the client apparatus in a cloud connection information DB,
a configuration information acquisition processing part configured to acquire the cloud configuration information constructed in the cloud service provision system from the cloud service provision system according to a cloud configuration information acquisition request from the configuration display processing part (214) of the client apparatus (21),
a cloud configuration history DB (225) configured to store the configuration information being acquired as a configuration history information, and
a configuration history acquisition processing part (222) configured to acquire a configuration history information from the cloud configuration history DB,
wherein the configuration storage processing part (213) having received a cloud configuration storage command from the user is configured to execute the following functions of
extracting a cloud ID for acquiring cloud configuration information from the cloud configuration display request command, and
transmitting a configuration information acquisition request of the extracted cloud ID to the configuration information acquisition processing part,
wherein the configuration information acquisition processing part (222) is configured to execute the following functions of
acquiring a cloud connection information from the cloud connection information DB based on the cloud ID,
specifying a cloud service provision system acquiring the cloud configuration information based on the acquired cloud connection information, and
acquiring the cloud configuration information (60) from the specified cloud service provision system and storing the information in the cloud configuration history DB (225), and
wherein the configuration history display processing part (214) is configured to execute the following functions of
acquiring a configuration history (70,80) from the configuration information acquisition processing part based on a cloud information whose configuration is to be displayed received from the user,
generating a cloud configuration diagram using a configuration component icon corresponding to each configuration element and a connection information based on the configuration history being acquired, and
displaying the cloud configuration diagram being generated on the screen.

## Patentansprüche

1. Cloud-Konfigurationsspeichersystem (28), das dazu konfiguriert ist, sich mit einem oder mehreren Cloud-Dienst-Bereitstellungssystemen (24) zu verbinden, die einen Cloud-Dienst (laaS) bereitstellen, wobei das System umfasst:
eine Client-Einrichtung (21) und eine Server-Einrichtung (22),
wobei die Client-Einrichtung (21) umfasst
einen Cloud-Verbindungsinformationsempfangsteil (211), der dazu konfiguriert ist, von dem Nutzer eine Cloud-Verbindungsinformation (50) zu empfangen, die sich auf Informationen bezieht, die zur Nutzung des Cloud-Dienstes zum Aufbauen einer Cloud-Umgebung notwendig sind,
einen Konfigurationsspeicherverarbeitungsteil (213), der dazu konfiguriert ist, eine Bezeichnung der Cloud-Umgebung, die gespeichert werden soll, zu empfangen, und
einen Konfigurationsverlaufsanzeigeverarbeitungsteil (214), der dazu konfiguriert ist, eine Anzeigesteuerung eines Konfigurationsverlaufs der Cloud-Umgebung, die gespeichert wird, durchzuführen,
wobei die Server-Einrichtung (22) umfasst
einen Cloud-Verbindungsinformationsteil (221), der dazu konfiguriert ist, die Cloud-Verbindungsinformation (50), die durch den Cloud-Verbindungsinformationsempfangsteil (211) der Client-Einrichtung (21) empfangen wird, in einer Cloud-Verbindungsinformations-DB (223) zu speichern und zu registrieren,
einen Konfigurationsinformationserlangungsverarbeitungsteil (222), der dazu konfiguriert ist, die Cloud-Konfigurationsinformation (60), die in dem Cloud-Dienstbereitstellungssystem (24) erstellt wird, von dem Cloud-Dienstbereitstellungssystem gemäß einer Cloud-Konfigurationsinformationserlangungsanfrage von dem Konfigurationsverlaufsanzeigeverarbeitungsteil (214) der Client-Einrichtung (21) zu erlangen,
eine Cloud-Konfigurationsverlaufs-DB (225), die dazu konfiguriert ist, die Konfigurationsinformation, die erlangt wird (60), als eine Konfigurationsverlaufsinformation (70,80) zu speichern, und
einen Konfigurationsverlaufserlangungsverarbeitungsteil (224), der dazu konfiguriert ist, eine Konfigurationsverlaufsinformation (70,80) von der Cloud-Konfigurationsverlaufs-DB (225) zu erlangen,
wobei der Konfigurationsspeicherverarbeitungsteil (213), nachdem er einen Cloud-Konfigurationsspeicherbefehl von dem Nutzer empfangen hat, konfiguriert ist zum
Extrahieren einer Cloud-ID zum Erlangen von Cloud-Konfigurationsinformationen (60) aus dem Cloud-Konfigurationsanzeigeanfragebefehl und
Übertragen (S1002) des Konfigurationsanzeigebefehls der extrahierten Cloud-ID zu dem Konfigurationsinformationserlangungsverarbeitungsteil (222),
wobei der Konfigurationsinformationserlangungsverarbeitungsteil (222) konfiguriert ist zum
Erlangen einer Cloud-Verbindungsinformation (50) von der Cloud-Verbindungsinformations-DB (223) basierend auf der Cloud-ID,
Spezifizieren eines Cloud-Dienstbereitstellungssystems (24), das die Cloud-Konfigurationsinformation (60) basierend auf der erlangten Cloud-Verbindungsinformation (50) erlangt, und
Erlangen der Cloud-Konfigurationsinformation (60) von dem spezifizierten Cloud-Dienstbereitstellungssystem (24) und Speichern der Information in der Cloud-Konfigurationsverlaufs-DB (225) und
wobei der Konfigurationsverlaufsanzeigeverarbeitungsteil (214) konfiguriert ist zum
Erlangen eines Konfigurationsverlaufs von dem Konfigurationsinformationserlangungsverarbeitungsteil (222) basierend auf einer Cloud-Information, deren Konfiguration angezeigt werden soll, empfangen von dem Nutzer,
Erzeugen eines Cloud-Konfigurationsdiagramms (1a,1b) unter Verwendung eines Konfigurationskomponentensymbols, das jedem Konfigurationselement entspricht, und einer Verbindungsinformation basierend auf dem Konfigurationsverlauf, der erlangt wird, und
Anzeigen des Cloud-Konfigurationsdiagramms (1a,1b), das erzeugt wird, auf dem Bildschirm.

2. Cloud-Konfigurationsspeichersystem nach Anspruch 1, wobei die Client-Einrichtung (21) oder die Server-Einrichtung (22) umfasst
eine CPU (2101,2201), die dazu konfiguriert ist, eine gesamte Einrichtung zu steuern,
einen Kurzzeitspeicher (2102,2202), der dazu konfiguriert ist, Informationen temporär zu speichern,
einen Langzeitspeicherteil (2103,2203), der dazu konfiguriert ist, Informationen dauerhaft zu speichern, und
einen oder mehrere von einem Kommunikationsteil (2107,2207), der dazu konfiguriert ist, die Kommunikation mit einer externen Vorrichtung zu steuern, einem Eingabeteil (2014,2204), der dazu konfiguriert ist, Informationen von außen zu empfangen, einem Ausgabeteil, der dazu konfiguriert ist, Informationen an die externe Vorrichtung auszugeben, und einem Anzeigeteil, der dazu konfiguriert ist, Informationen anzuzeigen.

3. Cloud-Konfigurationsspeichersystem nach Anspruch 2, wobei die Cloud-Verbindungsinformation (50) mindestens eine Cloud-ID, die dazu konfiguriert ist, die Cloud-Umgebung eindeutig zu identifizieren, eine Cloud-Anbieter-ID, die dazu konfiguriert ist, das Cloud-Dienstbereitstellungssystem eindeutig zu identifizieren, einen Cloud-Namen und eine Netzwerkverbindungsinformation zu der Cloud beinhaltet.

4. Cloud-Konfigurationsspeichersystem nach Anspruch 3,
wobei die Cloud-Konfigurationsinformation (60) aus einer Cloud-ID, einer Konfigurationseinrichtung, einer Konfigurationskomponente und einer Konfigurationsinformationseinstellungskomponente besteht,
die Konfigurationseinrichtung mindestens einen Namen eines virtuellen Datenzentrums, einen Namen eines virtuellen Netzwerks, einen Namen einer Ausrüstung des virtuellen Netzwerks, einen Namen eines virtuellen Servers und eine mit dem virtuellen Server assoziierte Information beinhaltet,
die Konfigurationskomponente, die dem Namen einer Ausrüstung des virtuellen Netzwerks entspricht, mindestens Konfigurationskomponenten eines Lastverteilers (Load Balancer), eines Internet-Gateways, eines VPN-Gateways, einer VPN-Verbindung und einer Nutzerverbindung beinhaltet,
die Konfigurationskomponente, die der mit dem virtuellen Server assoziierten Information entspricht, mindestens Konfigurationskomponenten eines globalen IP, einer Sicherheitsgruppe, eines Maschinenabbildes, einer virtuellen CPU, eines virtuellen Kurzzeitspeichers und eines virtuellen Langzeitspeichers beinhaltet und
ein Symbol für jede Konfigurationseinrichtung oder Konfigurationskomponente erzeugt wird und ein Konfigurationsdiagramm erzeugt wird.

5. Cloud-Konfigurationsspeichersystem nach Anspruch 4,
wobei der Konfigurationsverlaufsanzeigeverarbeitungsteil (214) konfiguriert ist zum
Erlangen eines Konfigurationsverlaufs ab einem Zeitpunkt, der von dem Nutzer bezeichnet wird, aus der Cloud-Konfigurationsverlaufs-DB (225),
Erzeugen eines Konfigurationsdiagramms aus dem Konfigurationsverlauf (70,80) und
Anzeigen des Konfigurationsdiagramms, das erzeugt wird.

6. Cloud-Konfigurationsspeichersystem nach Anspruch 5,
wobei der Konfigurationsverlaufsanzeigeverarbeitungsteil (214) konfiguriert ist zum Erzeugen eines Konfigurationsdiagramms basierend auf einem Konfigurationsverlauf (70,80) ab einer Vielzahl von Zeitpunkten, die von dem Nutzer bezeichnet werden, und gleichzeitiges Anzeigen einer Vielzahl der Konfigurationsdiagramme, die erzeugt werden.

7. Cloud-Konfigurationsspeichersystem nach Anspruch 4,
wobei der Konfigurationsverlaufsanzeigeverarbeitungsteil (214) konfiguriert ist zum
Erlangen eines Konfigurationsverlaufs (70,80) ab einem Zeitpunkt, der von dem Nutzer bezeichnet wird, aus der Cloud-Konfigurationsverlaufs-DB,
Vervielfältigen des Konfigurationsverlaufs und
Erzeugen und Anzeigen eines Konfigurationsdiagramms basierend auf dem Konfigurationsverlauf, der vervielfältigt wurde.

8. Cloud-Konfigurationsspeichersystem nach Anspruch 5,
wobei der Konfigurationsverlaufsanzeigeverarbeitungsteil (214) konfiguriert ist zum Erzeugen von Konfigurationsdiagrammen basierend auf einem Konfigurationsverlauf (70,80), der dem Zeitpunkt entspricht, der von dem Nutzer bezeichnet wird, und basierend auf dem Konfigurationsverlauf, der vervielfältigt wird, und gleichzeitiges Anzeigen der Vielzahl von Konfigurationsdiagrammen, die erzeugt werden.

9. Cloud-Konfigurationsspeichersystem nach Anspruch 1, wobei:
der Konfigurationsinformationserlangungsverarbeitungsteil weiter umfasst:
einen Verarbeitungsteil, der dazu konfiguriert ist, basierend auf der Cloud-ID die Cloud-Verbindungsinformation (50) aus einer Cloud-Verbindungsinformations-DB (223,S1101) zu erlangen,
einen ersten Cloud-Bestimmungsverarbeitungsteil, der dazu konfiguriert ist zu bestimmen, ob eine Cloud, die durch eine Cloud-Anbieter-ID bezeichnet ist, die der spezifizierten Cloud-ID entspricht, von einem ersten Unternehmen bereitgestellt wird oder nicht (S1102),
einen ersten Konfigurationsinformationserlangungsverarbeitungsteil, der dazu konfiguriert ist, in einem Fall, in dem die bezeichnete Cloud von dem ersten Unternehmen bereitgestellt wird, eine Erlangungsanfrage nach den Konfigurationsinformationen zu einem ersten Cloud-Dienst zu senden, erste Konfigurationsinformationen von dem ersten Cloud-Dienst zu erhalten und einen Konfigurationsverlauf zu aktualisieren (S1103),
einen zweiten Cloud-Bestimmungsverarbeitungsteil, der dazu konfiguriert ist, in einem Fall, in dem die bezeichnete Cloud nicht von dem ersten Unternehmen bereitgestellt wird, zu bestimmen, ob eine Cloud, die durch eine Cloud-Anbieter-ID bezeichnet wird, die der spezifizierten Cloud-ID entspricht, von einem zweiten Unternehmen bereitgestellt wird oder nicht (S1104),
einen zweiten Konfigurationsinformationserlangungsverarbeitungsteil, der dazu konfiguriert ist, in einem Fall, in dem die bezeichnete Cloud von dem zweiten Unternehmen bereitgestellt wird, eine Erlangungsanfrage nach zweiten Konfigurationsinformationen zu dem zweiten Cloud-Dienst zu senden, die zweiten Konfigurationsinformationen von dem zweiten Cloud-Dienst zu erhalten und einen Konfigurationsverlauf zu aktualisieren (S1105), und
einen dritten Cloud-Bestimmungsverarbeitungsteil, der dazu konfiguriert ist zu bestimmen, ob die ersten und zweiten Konfigurationsinformationen aller bezeichneten Clouds erlangt wurden oder nicht (S1108); und
der Konfigurationsverlaufsanzeigeverarbeitungsteil (214) weiter umfasst:
einen Verarbeitungsteil, der dazu konfiguriert ist, eine Cloud-ID, die angezeigt werden soll, aus den Eingabeinformationen, die durch die Nutzung über den Eingabeteil eingegeben werden, und eine Konfigurationsverlauf-ID, die eine Konfiguration angibt, deren Zeit angezeigt werden soll, zu erlangen (S1301),
einen Verarbeitungsteil, der dazu konfiguriert ist zu bestimmen, ob eine aktuelle Konfiguration angezeigt werden soll oder nicht, basierend auf der erlangten Konfigurationsverlauf-ID (S1302),
einen Verarbeitungsteil, der dazu konfiguriert ist, in einem Fall des Anzeigens der aktuellen Konfiguration Konfigurationsinformationen aus der Konfigurationsverlaufs-DB zu erlangen, ein Abbild der aktuellen Konfiguration zu erzeugen und das erzeugte Abbild der aktuellen Konfiguration auf einem Bildschirm des Anzeigeteils anzuzeigen (S1303),
einen Verarbeitungsteil, der dazu konfiguriert ist, in einem Fall des Nicht-Anzeigens der aktuellen Konfiguration zu bestimmen, ob ein Abbild einer früheren Konfiguration angezeigt werden soll oder nicht (S1304),
einen Verarbeitungsteil, der dazu konfiguriert ist, in einem Fall des Anzeigens eines Abbildes einer früheren Konfiguration Konfigurationsinformationen, eine Konfigurationsverlaufstabelle und Konfigurationselementverlaufstabelleninformationen aus der Informationsverlaufs-DB zu erlangen, ein Konfigurationsabbild aus den erlangten Informationen zu erzeugen und das erzeugte Konfigurationsabbild auf einem Bildschirm des Anzeigeteils anzuzeigen (S1305),
einen Verarbeitungsteil, der dazu konfiguriert ist, einen Unterschiedsanteil von Konfigurationselementen zwischen dem Abbild der aktuellen Konfiguration und dem Abbild der früheren Konfiguration zu extrahieren und die extrahierten Konfigurationselemente hervorzuheben (S1307),
einen Verarbeitungsteil, der dazu konfiguriert ist zu bestimmen, ob eine Wiederherstellung der Konfigurationsinformationen angefragt wird oder nicht (S1308),
einen Verarbeitungsteil, der dazu konfiguriert ist, in einem Fall, in dem eine Wiederherstellung der Konfigurationsinformationen angefragt wird, die Cloud-Umgebung unter Verwendung der Informationen zu der früheren Konfiguration zu erstellen und ein Konfigurationsabbild davon auf einem Bildschirm des Anzeigeteils anzuzeigen (S1309)
einen Verarbeitungsteil, der dazu konfiguriert ist, in einem Fall, in dem eine Wiederherstellung der Konfigurationsinformationen nicht angefragt wird, zu bestimmen, ob ein Kopieren der Konfigurationsinformationen angefragt wird oder nicht (S1310),
einen Verarbeitungsteil, der dazu konfiguriert ist, in einem Fall, in dem ein Kopieren der Cloud-Umgebung angefragt wird, eine Kopie der Cloud-Umgebung unter Verwendung aktueller Konfigurationsinformationen auszuführen, ein Konfigurationsabbild davon auf einem Bildschirm anzuzeigen und die Verarbeitung zu beenden (S1311); und
einen Verarbeitungsteil, der dazu konfiguriert ist, in einem Fall, in dem ein Kopieren der Konfigurationsinformationen nicht angefragt wird, eine Fehlermitteilung zu einem Nutzer zu übertragen und die Verarbeitung zu beenden (S1312).

10. Cloud-Konfigurationsspeicherverfahren eines Cloud-Konfigurationsspeichersystems, das dazu konfiguriert ist, sich mit einem oder mehreren Cloud-Dienst-Bereitstellungssystemen zu verbinden, die einen Cloud-Dienst bereitstellen, wobei das Cloud-Konfigurationsspeichersystem umfasst:
eine Client-Einrichtung (21) und eine Server-Einrichtung (22),
wobei die Client-Einrichtung umfasst
einen Cloud-Verbindungsinformationsempfangsteil, der dazu konfiguriert ist, von einem Nutzer eine Cloud-Verbindungsinformation (50) zu empfangen, die sich auf Informationen bezieht, die zur Nutzung des Cloud-Dienstes, der eine Cloud-Umgebung erstellt, notwendig sind,
einen Konfigurationsspeicherverarbeitungsteil, der dazu konfiguriert ist, eine Bezeichnung der Cloud-Umgebung, die gespeichert werden soll, zu empfangen, und
einen Konfigurationsverlaufsanzeigeverarbeitungsteil, der dazu konfiguriert ist, eine Anzeigensteuerung eines Konfigurationsverlaufs der Cloud-Umgebung, die gespeichert wird, durchzuführen,
wobei die Server-Einrichtung umfasst
einen Cloud-Verbindungsinformationsteil, der dazu konfiguriert ist, die Cloud-Verbindungsinformation (50), die durch den Cloud-Verbindungsinformationsempfangsteil der Client-Einrichtung empfangen wird, in einer Cloud-Verbindungsinformations-DB zu speichern und zu registrieren,
einen Konfigurationsinformationserlangungsverarbeitungsteil, der dazu konfiguriert ist, die Cloud-Konfigurationsinformationen, die in dem Cloud-Dienstbereitstellungssystem erstellt werden, von dem Cloud-Dienstbereitstellungssystem gemäß einer Cloud-Konfigurationsinformationserlangungsanfrage von dem Konfigurationsverlaufsanzeigeverarbeitungsteil der Client-Einrichtung zu erlangen,
eine Cloud-Konfigurationsverlaufs-DB, die dazu konfiguriert ist, die Konfigurationsinformation, die erlangt wird, als eine Konfigurationsverlaufsinformation zu speichern, und
einen Konfigurationsverlaufserlangungsverarbeitungsteil, der dazu konfiguriert ist, eine Konfigurationsverlaufsinformation von der Cloud-Konfigurationsverlaufs-DB zu erlangen,
wobei der Konfigurationsspeicherverarbeitungsteil (213), nachdem er einen Cloud-Konfigurationsspeicherbefehl von dem Nutzer empfangen hat, konfiguriert ist, die folgenden Schritte auszuführen
Extrahieren einer Cloud-ID zum Erlangen von Cloud-Konfigurationsinformationen aus dem Cloud-Konfigurationsanzeigeanfragebefehl und
Übertragen eines Konfigurationsinformationserlangungsbefehls der extrahierten Cloud-ID zu dem Konfigurationsinformationserlangungsverarbeitungsteil,
wobei der Konfigurationsinformationserlangungsverarbeitungsteil (222) konfiguriert ist, die folgenden Schritte auszuführen
Erlangen einer Cloud-Verbindungsinformation von der Cloud-Verbindungsinformations-DB basierend auf der Cloud-ID,
Spezifizieren eines Cloud-Dienstbereitstellungssystems, das die Cloud-Konfigurationsinformation basierend auf der erlangten Cloud-Verbindungsinformation erlangt, und
Erlangen der Cloud-Konfigurationsinformation von dem spezifizierten Cloud-Dienstbereitstellungssystem und Speichern der Information in der Cloud-Konfigurationsverlaufs-DB und
wobei der Konfigurationsverlaufsanzeigeverarbeitungsteil (214) dazu konfiguriert ist, die folgenden Schritte auszuführen
Erlangen eines Konfigurationsverlaufs von dem Konfigurationsinformationserlangungsverarbeitungsteil basierend auf einer Cloud-Information, deren Konfiguration angezeigt werden soll, empfangen von dem Nutzer,
Erzeugen eines Cloud-Konfigurationsdiagramms unter Verwendung eines Konfigurationskomponentensymbols, das jedem Konfigurationselement entspricht, und einer Verbindungsinformation basierend auf dem Konfigurationsverlauf, der erlangt wird, und
Anzeigen des Cloud-Konfigurationsdiagramms, das erzeugt wird, auf dem Bildschirm.

11. Cloud-Konfigurationsspeicherprogramm eines Cloud-Konfigurationsspeichersystems, das dazu konfiguriert ist, sich mit einem oder mehreren Cloud-Dienstbereitstellungssystemen zu verbinden, die einen Cloud-Dienst bereitstellen, wobei das Cloud-Konfigurationsspeichersystem umfasst:
eine Client-Einrichtung (21) und eine Server-Einrichtung,
wobei die Client-Einrichtung umfasst
einen Cloud-Verbindungsinformationsempfangsteil, der dazu konfiguriert ist, von einem Nutzer eine Cloud-Verbindungsinformation (50) zu empfangen, die sich auf Informationen bezieht, die zur Nutzung des Cloud-Dienstes, der eine Cloud-Umgebung erstellt, notwendig sind,
einen Konfigurationsspeicherverarbeitungsteil (211), der dazu konfiguriert ist, eine Bezeichnung der Cloud-Umgebung, die gespeichert werden soll, zu empfangen, und
einen Konfigurationsverlaufsanzeigeverarbeitungsteil (214), der dazu konfiguriert ist, eine Anzeigesteuerung eines Konfigurationsverlaufs der Cloud-Umgebung, die gespeichert wird, durchzuführen,
wobei die Server-Einrichtung (22) umfasst
einen Cloud-Verbindungsinformationsteil, der dazu konfiguriert ist, die Cloud-Verbindungsinformation, die durch den Cloud-Verbindungsinformationsempfangsteil (211) der Client-Einrichtung empfangen wird, in einer Cloud-Verbindungsinformations-DB zu speichern und zu registrieren,
einen Konfigurationsinformationserlangungsverarbeitungsteil, der dazu konfiguriert ist, die Cloud-Konfigurationsinformation, die in dem Cloud-Dienstbereitstellungssystem erstellt wird, von dem Cloud-Dienstbereitstellungssystem gemäß einer Cloud-Konfigurationsinformationserlangungsanfrage von dem Konfigurationsanzeigeverarbeitungsteil (214) der Client-Einrichtung (21) zu erlangen,
eine Cloud-Konfigurationsverlaufs-DB (225), die dazu konfiguriert ist, die Konfigurationsinformation, die erlangt wird, als eine Konfigurationsverlaufsinformation zu speichern, und
einen Konfigurationsverlaufserlangungsverarbeitungsteil (222), der dazu konfiguriert ist, eine Konfigurationsverlaufsinformation von der Cloud-Konfigurationsverlaufs-DB zu erlangen,
wobei der Konfigurationsspeicher-Verarbeitungsteil (213), nachdem er einen Cloud-Konfigurationsspeicherbefehl von dem Nutzer empfangen hat, dazu konfiguriert ist, die folgenden Funktionen auszuführen
Extrahieren einer Cloud-ID zum Erlangen von Cloud-Konfigurationsinformationen aus dem Cloud-Konfigurationsanzeigeanfragebefehl und
Übertragen einer Konfigurationsinformationserlangungsanfrage der extrahierten Cloud-ID zu dem Konfigurationsinformationserlangungsverarbeitungsteil,
wobei der Konfigurationsinformationserlangungsverarbeitungsteil (222) dazu konfiguriert ist, die folgenden Funktionen auszuführen
Erlangen einer Cloud-Verbindungsinformation von der Cloud-Verbindungsinformations-DB basierend auf der Cloud-ID,
Spezifizieren eines Cloud-Dienstbereitstellungssystems, das die Cloud-Konfigurationsinformation basierend auf der erlangten Cloud-Verbindungsinformation erlangt, und
Erlangen der Cloud-Konfigurationsinformation (60) von dem spezifizierten Cloud-Dienstbereitstellungssystem und Speichern der Information in der Cloud-Konfigurationsverlaufs-DB (225) und
wobei der Konfigurationsverlaufsanzeigeverarbeitungsteil (214) dazu konfiguriert ist, die folgenden Funktionen auszuführen
Erlangen eines Konfigurationsverlaufs (70,80) von dem Konfigurationsinformationserlangungsverarbeitungsteil basierend auf einer Cloud-Information, deren Konfiguration angezeigt werden soll, empfangen von dem Nutzer,
Erzeugen eines Cloud-Konfigurationsdiagramms unter Verwendung eines Konfigurationskomponentensymbols, das jedem Konfigurationselement entspricht, und einer Verbindungsinformation basierend auf dem Konfigurationsverlauf, der erlangt wird, und
Anzeigen des Cloud-Konfigurationsdiagramms, das erzeugt wird, auf dem Bildschirm.

## Revendications

1. Système de stockage de configuration en cloud (28) configuré pour se connecter à un ou plusieurs systèmes de fourniture de service cloud (24) fournissant un service cloud (laaS), le système comprenant :
un appareil client (21) et un appareil serveur (22),
l'appareil client (21) comprenant
une partie de réception d'informations de connexion de cloud (211) configurée pour recevoir de l'utilisateur des informations de connexion de cloud (50) se référant à des informations nécessaires pour utiliser le service cloud pour construire un environnement cloud,
une partie de traitement de stockage de configuration (213) configurée pour recevoir une désignation de l'environnement cloud à stocker, et
une partie de traitement d'affichage d'historique de configuration (214) configurée pour effectuer une commande d'affichage d'un historique de configuration de l'environnement cloud étant stocké,
l'appareil serveur (22) comprenant
une partie d'informations de connexion de cloud (221) configurée pour stocker et enregistrer les informations de connexion de cloud (50) reçues par la partie de réception d'informations de connexion de cloud (211) de l'appareil client (21) dans une DB d'informations de connexion de cloud (223),
une partie de traitement d'acquisition d'informations de configuration (222) configurée pour acquérir les informations de configuration en cloud (60) conçues dans le système de fourniture de service cloud (24) à partir du système de fourniture de service cloud conformément à une demande d'acquisition d'informations de configuration en cloud depuis la partie de traitement d'affichage de configuration (214) de l'appareil client (21),
une DB d'historique de configuration en cloud (225) configurée pour stocker les informations de configuration étant acquises (60) en tant qu'informations d'historique de configuration (70,80), et
une partie de traitement d'acquisition d'historique de configuration (224) configurée pour acquérir des informations d'historique de configuration (70,80) à partir de la DB d'historique de configuration en cloud (225),
dans lequel la partie de traitement de stockage de configuration (213) ayant reçu une commande de stockage de configuration en cloud de l'utilisateur est configurée pour
extraire un ID de cloud pour acquérir des informations de configuration en cloud (60) de la commande de demande d'affichage de configuration en cloud, et
transmettre (S1002) la commande d'affichage de configuration de l'ID de cloud extrait à la partie de traitement d'acquisition d'informations de configuration (222),
dans lequel la partie de traitement d'acquisition d'informations de configuration (222) est configurée pour
acquérir des informations de connexion de cloud (50) depuis la DB d'informations de connexion de cloud (223) sur la base de l'ID de cloud,
spécifier un système de fourniture de service cloud (24) acquérant les informations de configuration en cloud (60) sur la base des informations de connexion de cloud (50) acquises, et
acquérir les informations de configuration en cloud (60) auprès du système de fourniture de service cloud spécifié (24) et stocker les informations dans la DB d'historique de configuration en cloud (225), et
dans lequel la partie de traitement d'affichage d'historique de configuration (214) est configurée pour
acquérir un historique de configuration depuis la partie de traitement d'acquisition d'informations de configuration (222) sur la base d'informations de cloud dont la configuration doit être affichée reçues de l'utilisateur,
générer un diagramme de configuration en cloud (1a,1b) en utilisant une icône constituante de configuration correspondant à chaque élément de configuration et à des informations de connexion sur la base de l'historique de configuration étant acquis, et
afficher le diagramme de configuration en cloud (1a,1b) étant généré sur l'écran.

2. Système de stockage de configuration en cloud selon la revendication 1, dans lequel l'appareil client (21) ou l'appareil serveur (22) comprend
une CPU (2101,2201) configurée pour commander un appareil entier,
une mémoire (2102,2202) configurée pour stocker des informations de manière temporaire,
une partie de stockage (2103,2203) configurée pour stocker des informations de manière permanente, et
une ou plusieurs d'une partie de communication (2107,2207) configurée pour commander la communication avec un dispositif externe, d'une partie d'entrée (2014,2204) configurée pour recevoir des informations de l'extérieur, d'une partie de sortie configurée pour délivrer des informations au dispositif externe, et d'une partie d'affichage configurée pour afficher des informations.

3. Système de stockage de configuration en cloud selon la revendication 2, dans lequel les informations de connexion de cloud (50) incluent au moins un ID de cloud configuré pour identifier de manière unique l'environnement cloud, un ID de fournisseur de cloud configuré pour identifier de manière unique le système de fourniture de service cloud, un nom de cloud et des informations de connexion de réseau au cloud.

4. Système de stockage de configuration en cloud selon la revendication 3,
dans lequel les informations de configuration en cloud (60) sont composées d'un ID de cloud, d'un appareil de configuration, d'une composante de configuration et d'un contenu de réglage d'informations de configuration,
l'appareil de configuration inclut au moins un nom de centre de données virtuel, un nom de réseau virtuel, un nom d'équipement de réseau virtuel, un nom de serveur virtuel et des informations associées de serveur virtuel,
la composante de configuration correspondant au nom d'équipement de réseau virtuel inclut au moins des composantes de configuration d'un équilibreur de charge, d'une passerelle Internet, d'une passerelle VPN, d'une connexion VPN et d'une connexion utilisateur,
la composante de configuration correspondant aux informations associées de serveur virtuel inclut au moins des composantes de configuration d'un IP global, d'un groupe de sécurité, d'une image machine, d'une CPU virtuelle, d'une mémoire virtuelle et d'un stockage virtuel, et
une icône pour chaque appareil de configuration ou composante de configuration est générée et un diagramme de configuration est généré.

5. Système de stockage de configuration en cloud selon la revendication 4,
dans lequel la partie de traitement d'affichage d'historique de configuration (214) est configurée pour
acquérir un historique de configuration en un point dans le temps désigné par l'utilisateur depuis la DB d'historique de configuration en cloud (225),
générer un diagramme de configuration à partir de l'historique de configuration (70,80), et
afficher le diagramme de configuration étant généré.

6. Système de stockage de configuration en cloud selon la revendication 5,
dans lequel la partie de traitement d'affichage d'historique de configuration (214) est configurée pour générer un diagramme de configuration sur la base d'un historique de configuration (70,80) en une pluralité de points dans le temps désignés par l'utilisateur et afficher simultanément une pluralité des diagrammes de configuration étant générés.

7. Système de stockage de configuration en cloud selon la revendication 4,
dans lequel la partie de traitement d'affichage d'historique de configuration (214) est configurée pour
acquérir un historique de configuration (70,80) en un point dans le temps désigné par l'utilisateur à partir de la DB d'historique de configuration en cloud,
répliquer l'historique de configuration, et
générer et afficher un diagramme de configuration sur la base de l'historique de configuration étant répliqué.

8. Système de stockage de configuration en cloud selon la revendication 5,
dans lequel la partie de traitement d'affichage d'historique de configuration (214) est configurée pour générer des diagrammes de configuration sur la base d'un historique de configuration (70,80) correspondant au point dans le temps désigné par l'utilisateur et sur la base de l'historique de configuration étant répliqué, et afficher simultanément la pluralité de diagrammes de configuration étant générés.

9. Système de stockage de configuration en cloud selon la revendication 1, dans lequel :
la partie de traitement d'acquisition d'informations de configuration comprend en outre :
une partie de traitement configurée pour acquérir, sur la base de l'ID de cloud, les informations de connexion de cloud (50) depuis une DB d'informations de connexion de cloud (223,51101),
une première partie de traitement de détermination de cloud configurée pour déterminer si un cloud désigné par un ID de fournisseur de cloud correspondant à l'ID de cloud spécifié est ou non fourni par une première société (S1102),
une première partie de traitement d'acquisition d'informations de configuration configurée pour envoyer, dans un cas où le cloud désigné est fourni par la première société, une demande d'acquisition pour les informations de configuration à un premier service cloud, obtenir des premières informations de configuration du premier service cloud, et mettre à jour un historique de configuration (S1103),
une deuxième partie de traitement de détermination de cloud configurée pour déterminer, dans un cas où le cloud désigné n'est pas fourni par la première société, si un cloud désigné par un ID de fournisseur de cloud correspondant à l'ID de cloud spécifié est ou non fourni par une seconde société (S1104),
une seconde partie de traitement d'acquisition d'informations de configuration configurée pour envoyer, dans un cas où le cloud désigné est fourni par la seconde société, une demande d'acquisition pour des secondes informations de configuration au second service cloud, obtenir les secondes informations de configuration du second service cloud, et mettre à jour un historique de configuration (S1105), et
une troisième partie de traitement de détermination de cloud configurée pour déterminer si les premières et secondes informations de configuration de tous les clouds désignés ont ou non été acquises (S1108) ; et
la partie de traitement d'affichage (214) d'historique de configuration comprend en outre :
une partie de traitement configurée pour acquérir un ID de cloud à afficher à partir des informations d'entrée introduites par l'utilisateur depuis la partie d'entrée et un ID d'historique de configuration indiquant une configuration dont le temps devrait être affiché (S1301),
une partie de traitement configurée pour déterminer s'il faut ou non afficher une configuration courante sur la base de l'ID d'historique de configuration acquis (S1302),
une partie de traitement configurée pour acquérir, dans un cas de l'affichage de la configuration courante, des informations de configuration de la DB d'historique de configuration, générer une image de configuration courante et afficher l'image de configuration courante générée sur un écran de la partie d'affichage (S1303),
une partie de traitement configurée pour déterminer, dans un cas du non-affichage de la configuration courante, s'il faut ou non afficher une image de configuration passée (S1304),
une partie de traitement configurée pour acquérir, dans un cas d'affichage d'une image de configuration passée, des informations de configuration, une table d'historique de configuration, et des informations de table d'historique d'éléments de configuration de la DB d'historique d'informations, générer une image de configuration à partir des informations acquises et afficher l'image de configuration générée sur un écran de la partie d'affichage (S1305),
une partie de traitement configurée pour extraire une partie de différence d'éléments de configuration entre l'image de configuration courante et l'image de configuration passée, et mettre en lumière les éléments de configuration extraits (S1307),
une partie de traitement configurée pour déterminer si la restauration des informations de configuration est ou non demandée (S1308),
une partie de traitement configurée pour construire, dans un cas où la restauration des informations de configuration est demandée, l'environnement cloud en utilisant les informations de configuration passées et afficher une image de configuration de celle-ci sur un écran de la partie d'affichage (S1309),
une partie de traitement configurée pour déterminer, dans un cas où la restauration des informations de configuration n'est pas demandée, si une copie des informations de configuration est ou non demandée (S1310),
une partie de traitement configurée pour exécuter, dans un cas où une copie de l'environnement de cloud est demandée, une copie de l'environnement cloud en utilisant des informations de configuration courante, afficher une image de configuration de celle-ci sur un écran, et terminer le traitement (S1311) ; et
une partie de traitement configurée pour transmettre, dans un cas où une copie des informations de configuration n'est pas demandée, une notification d'erreur à un utilisateur et terminer le traitement (S1312).

10. Procédé de stockage de configuration en cloud d'un système de stockage de configuration en cloud configuré pour se connecter à un ou plusieurs systèmes de fourniture de service cloud fournissant un service cloud, le système de stockage de configuration en cloud comprenant :
un appareil client (21) et un appareil serveur (22),
l'appareil client comprenant
une partie de réception d'informations de connexion de cloud configurée pour recevoir des informations de connexion de cloud (50) se référant à des informations nécessaires pour utiliser le service cloud, en construisant un environnement cloud, d'un utilisateur,
une partie de traitement de stockage de configuration configurée pour recevoir une désignation de l'environnement cloud à stocker, et
une partie de traitement d'affichage d'historique de configuration configurée pour effectuer une commande d'affichage d'un historique de configuration de l'environnement cloud étant stocké,
l'appareil serveur comprenant
une partie d'informations de connexion de cloud configurée pour stocker et enregistrer les informations de connexion de cloud (50) reçues par la partie de réception d'informations de connexion de cloud de l'appareil client dans une DB d'informations de connexion de cloud,
une partie de traitement d'acquisition d'informations de configuration configurée pour acquérir les informations de configuration en cloud conçues dans le système de fourniture de service cloud à partir du système de fourniture de service cloud conformément à une demande d'acquisition d'informations de configuration en cloud de la partie de traitement d'affichage de configuration de l'appareil client,
une DB d'historique de configuration en cloud configurée pour stocker les informations de configuration étant acquises en tant qu'informations d'historique de configuration, et
une partie de traitement d'acquisition d'historique de configuration configurée pour acquérir des informations d'historique de configuration de la DB d'historique de configuration en cloud,
dans lequel la partie de traitement de stockage de configuration (213) ayant reçu une commande de stockage de configuration en cloud de l'utilisateur est configurée pour exécuter les étapes suivantes consistant à
extraire un ID de cloud pour acquérir des informations de configuration en cloud de la commande de demande d'affichage de configuration en cloud, et
transmettre une commande d'acquisition d'informations de configuration de l'ID de cloud extrait à la partie de traitement d'acquisition d'informations de configuration,
dans lequel la partie de traitement d'acquisition d'informations de configuration (222) est configurée pour exécuter les étapes suivantes consistant à
acquérir des informations de connexion de cloud depuis la DB d'informations de connexion de cloud sur la base de l'ID de cloud,
spécifier un système de fourniture de service cloud acquérant les informations de configuration en cloud sur la base des informations de connexion de cloud acquises, et
acquérir les informations de configuration en cloud auprès du système de fourniture de service cloud spécifié et stocker les informations dans la DB d'historique de configuration en cloud, et
dans lequel la partie de traitement d'affichage d'historique de configuration (214) est configurée pour exécuter les étapes suivantes consistant à
acquérir un historique de configuration depuis la partie de traitement d'acquisition d'informations de configuration sur la base d'informations de cloud dont la configuration doit être affichée reçues de l'utilisateur,
générer un diagramme de configuration en cloud en utilisant une icône constituante de configuration correspondant à chaque élément de configuration et à des informations de connexion sur la base de l'historique de configuration étant acquis, et
afficher le diagramme de configuration en cloud étant généré sur l'écran.

11. Programme de stockage de configuration en cloud d'un système de stockage de configuration en cloud configuré pour se connecter à un ou plusieurs systèmes de fourniture de service cloud fournissant un service cloud, le système de stockage de configuration en cloud comprenant :
un appareil client (21) et un appareil serveur,
l'appareil client comprenant
une partie de réception d'informations de connexion de cloud configurée pour recevoir des informations de connexion de cloud (50) se référant à des informations nécessaires pour utiliser le service cloud, en construisant un environnement cloud d'un utilisateur,
une partie de traitement de stockage de configuration (211) configurée pour recevoir une désignation de l'environnement cloud à stocker, et
une partie de traitement d'affichage d'historique de configuration (214) configurée pour effectuer une commande d'affichage d'un historique de configuration de l'environnement cloud étant stocké,
l'appareil serveur (22) comprenant
une partie d'informations de connexion de cloud configurée pour stocker et enregistrer les informations de connexion de cloud reçues par la partie de réception d'informations de connexion de cloud (211) de l'appareil client dans une DB d'informations de connexion de cloud,
une partie de traitement d'acquisition d'informations de configuration configurée pour acquérir les informations de configuration en cloud conçues dans le système de fourniture de service cloud à partir du système de fourniture de service cloud conformément à une demande d'acquisition d'informations de configuration en cloud depuis la partie de traitement d'affichage de configuration (214) de l'appareil client (21),
une DB d'historique de configuration en cloud (225) configurée pour stocker les informations de configuration acquises en tant qu'informations d'historique de configuration, et
une partie de traitement d'acquisition d'historique de configuration (222) configurée pour acquérir des informations d'historique de configuration à partir de la DB d'historique de configuration en cloud,
dans lequel la partie de traitement de stockage de configuration (213) ayant reçu une commande de stockage de configuration en cloud de l'utilisateur est configurée pour exécuter les fonctions suivantes consistant à
extraire un ID de cloud pour acquérir des informations de configuration en cloud de la commande de demande d'affichage de configuration en cloud, et
transmettre une demande d'acquisition d'informations de configuration de l'ID de cloud extrait à la partie de traitement d'acquisition d'informations de configuration,
dans lequel la partie de traitement d'acquisition d'informations de configuration (222) est configurée pour exécuter les fonctions suivantes consistant à
acquérir des informations de connexion de cloud depuis la DB d'informations de connexion de cloud sur la base de l'ID de cloud,
spécifier un système de fourniture de service cloud acquérant les informations de configuration en cloud sur la base des informations de connexion de cloud acquises, et
acquérir les informations de configuration en cloud (60) du système de fourniture de service cloud spécifié et stocker les informations dans la DB d'historique de configuration en cloud (225), et
dans lequel la partie de traitement d'affichage d'historique de configuration (214) est configurée pour exécuter les fonctions suivantes consistant à
acquérir un historique de configuration (70,80) de la partie de traitement d'acquisition d'informations de configuration sur la base d'informations de cloud dont la configuration doit être affichée reçues de l'utilisateur,
générer un diagramme de configuration en cloud en utilisant une icône constituante de configuration correspondant à chaque élément de configuration et à des informations de connexion sur la base de l'historique de configuration étant acquis, et
afficher le diagramme de configuration en cloud étant généré sur l'écran.
